# EUROPEAN PATENT APPLICATION

(11) **EP 4 852 383 A1**
(43) Date of publication of application: **09.12.2026**
(21) Application number: 25767223.8
(22) Date of filing: 25.02.2025
(51) Int. Cl.: H04L 27/26

(54) **COMMUNICATION METHOD, COMMUNICATION APPARATUS, AND COMMUNICATION SYSTEM**

(30) Priority: 07.03.2024 CN 202410263632
(71) Applicant: HUAWEI TECHNOLOGIES CO., LTD., Shenzhen, Guangdong 518129 (CN)
(72) Inventor: HU, Mengshi, Shenzhen, Guangdong 518129 (CN); HAN, Xiao, Shenzhen, Guangdong 518129 (CN); GAN, Ming, Shenzhen, Guangdong 518129 (CN)
(74) Representative: Huawei European IPR
(86) International application number: PCT/CN2025/079038
(87) International publication number: WO 2025/185483

(57) **Abstract**

This application provides a communication method, a communication apparatus, and a communication system. In the method, for an application scenario in which a high-frequency PPDU is designed by using a low-frequency PPDU, a method for performing a channel measurement feedback for the high-frequency PPDU is provided. In the method, a measurement configuration used to generate a channel measurement feedback result is related to X and/or Y. X indicates a relationship between a subcarrier spacing of a field of a preamble in the high-frequency PPDU and a subcarrier spacing of a field of a preamble in the low-frequency PPDU. Y indicates a relationship between the subcarrier spacing of the field of the preamble in the high-frequency PPDU and a subcarrier spacing of a data field of the high-frequency PPDU. The method can ensure that the channel measurement feedback is correctly performed, and therefore helps improve communication performance.

## Description

### CROSS-REFERENCE TO RELATED APPLICATIONS

This application claims priority to Chinese Patent Application No. 202410263632.0, filed with the China National Intellectual Property Administration on March 7, 2024 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In a current preliminary design of an integrated millimeter wave standard for a wireless local area network (wireless local area network, WLAN), a proposal has been proposed to adopt an "upclocking (upclocking)" version of a low-frequency PPDU as a high-frequency PPDU for transmission, to better utilize an existing physical layer protocol data unit (physical layer protocol data unit, PPDU) design in a low frequency.

"Upclocking" is to shorten an interval between sending points. When a quantity of sending points remains unchanged, a period corresponding to a same quantity of sending points is shortened. Because the period is in a reciprocal relationship with a subcarrier spacing, the subcarrier spacing is increased. The subcarrier spacing needs to be increased because a larger subcarrier spacing can mitigate impact caused by a larger carrier frequency offset, phase noise, and the like at a high frequency, thereby helping improve high frequency communication performance.

For an application scenario in which a high-frequency PPDU is designed by using a low-frequency PPDU, how to perform a channel measurement feedback for the high-frequency PPDU to improve communication performance needs to be studied.

### SUMMARY

Embodiments of this application provide a communication method, a communication apparatus, and a communication system, to perform a correct channel measurement feedback for a high-frequency PPDU, thereby improving communication performance.

According to a first aspect, an embodiment of this application provides a communication method. The method may be performed by a first device or a module (for example, a chip) in the first device. The method includes: sending a first PPDU to a second device on a channel corresponding to a first bandwidth, where the first PPDU includes a first field of a first preamble and a data field, a subcarrier spacing of the first field is A, A=X*B, X is an integer greater than 1, B is a subcarrier spacing of a second field of a second preamble in a second PPDU, a subcarrier spacing of the data field is (A/4)*Y, and Y is a positive number; and receiving a channel measurement feedback result from the second device, where the channel measurement feedback result is obtained by performing a measurement based on a measurement configuration, the measurement configuration indicates a subcarrier resolution for a measurement feedback, and the measurement configuration is related to X and/or Y.

In the solution, for an application scenario in which a high-frequency PPDU is designed by using a low-frequency PPDU, a method for performing the channel measurement feedback for the high-frequency PPDU is provided. In the method, the measurement configuration used to generate a channel measurement feedback result is related to X and/or Y. X indicates a relationship between a subcarrier spacing of a field of a preamble in the high-frequency PPDU and a subcarrier spacing of a field of a preamble in the low-frequency PPDU. Y indicates a relationship between the subcarrier spacing of the field of the preamble in the high-frequency PPDU and a subcarrier spacing of a data field of the high-frequency PPDU. The method can ensure that the channel measurement feedback is correctly performed, and therefore helps improve communication performance.

According to a second aspect, an embodiment of this application provides a communication method. The method may be performed by a second device or a module (for example, a chip) in the second device. The method includes: receiving a first PPDU from a first device on a channel corresponding to a first bandwidth, where the first PPDU includes a first field of a first preamble and a data field, a subcarrier spacing of the first field is A, A=X*B, X is an integer greater than 1, B is a subcarrier spacing of a second field of a second preamble in a second PPDU, a subcarrier spacing of the data field is (A/4)*Y, and Y is a positive number; performing a measurement based on a measurement configuration to obtain a channel measurement feedback result, where the measurement configuration indicates a subcarrier resolution for a measurement feedback, and the measurement configuration is related to X and/or Y; and sending the channel measurement feedback result to the first device.

Based on the first aspect, the second aspect, any implementation method according to the first aspect, or any implementation method according to the second aspect:

In a possible implementation method, an operating frequency band of the first PPDU is a high frequency band, and the high frequency band is from 42.5 GHz to 71 GHz; and an operating frequency band of the second PPDU is a low frequency band, and the low frequency band is less than or equal to 7 GHz.

In a possible implementation method, the first bandwidth is 20*X MHz, 40*X MHz, 80*X MHz, 160*X MHz, or 320*X MHz.

In a possible implementation method, the measurement configuration includes a size of a resource unit (resource unit, RU) or a multi-resource unit (multi-RU, MRU) for the measurement feedback. The size of the RU or the MRU for the measurement feedback is a size of a largest RU or a largest MRU that does not exceed a first size divided by Y. The first size is a size of an RU corresponding to a second bandwidth in the low frequency band or a quantity of subcarriers corresponding to the low frequency band, and the second bandwidth is equal to the first bandwidth divided by X.

In the foregoing solution, the size of the RU or the MRU used during a channel measurement feedback is designed, which helps implement a correct channel measurement feedback.

In a possible implementation method, the data field includes an NDPA frame. The NDPA frame includes a partial bandwidth information field, and the partial bandwidth information field indicates a bandwidth on which the measurement feedback is to be performed. When the first bandwidth is less than or equal to 160*X MHz, a value of a most significant bit in the partial bandwidth information field is 0, and a measurement feedback resolution indicated by the NDPA frame is 20*X MHz; or when the first bandwidth is equal to 320*X MHz, the value of the most significant bit in the partial bandwidth information field is 1, and the measurement feedback resolution indicated by the NDPA frame is 40*X MHz.

In a possible implementation method, a relationship among the first bandwidth, the size of the RU or the MRU for the measurement feedback, the partial bandwidth information field, and an operating bandwidth of the second device is as follows.

| Size of the RU or the MRU for the measurement feedback | First bandwidth (MHz) | Binary format of the partial bandwidth information field | Operating bandwidth of the second device |
|---|---|---|---|
| Size of the largest | 20*X | 010000000 | (20, 40, 80, |
| RU not exceeding 242/Y | 40*X | 010000000, 001000000 | 160, 320)*X |
| | 80*X | 010000000, 001000000, 000100000, 000010000 | (20, 80, 160, 320)*X |
| | 160*X | 010000000, 001000000, 000100000, 000010000, 000001000, 000000100, 000000010, 000000001 | |
| Size of the largest RU not exceeding 484/Y | 40*X | 011000000 | (40, 80, 160, 320)*X |
| | 80*X | 011000000, 000110000 | (80, 160, 320)*X |
| | 160*X | 011000000, 000110000, 000001100, 000000011 | |
| | 320*X | 110000000, 101000000, 100100000, 100010000, 100001000, 100000100, 100000010, 100000001 | |
| Size of the largest MRU not exceeding (484+242)/Y | 80*X | 011100000, 011010000, 010110000, 001110000 | |
| | 160*X | 011100000, 011010000, 010110000, 001110000, 000001110, 000001101, 000001011, 000000111 | |
| Size of the largest RU not exceeding 996/Y | 80*X | 011110000 | |
| | 160*X | 011110000, 000001111 | |
| | 320*X | 111000000, 100110000, 100001100, 100000011 | |
| Size of the largest MRU not exceeding (996+484)/Y | 160*X | 011111100, 011110011, 011001111, 000111111 | (160, 320)*X |
| | 320*X | 111100000, 111010000, 110110000, 101110000, 100001110, 100001101, 100001011, 100000111 | |
| Size of the largest MRU not exceeding (996+484+242)/Y | 160*X | 011101111, 011011111, 010111111, 001111111, 011111110, 011111101, 011111011, 011110111 | |
| Size of the largest RU not exceeding 2*996/Y | 160*X | 011111111 | |
| | 320*X | 111110000, 100001111 | |
| Size of the largest MRU not exceeding (2*996+484)/Y | 320*X | 111111000, 111110100, 111101100, 111011100, 110111100, 101111100, 100111110, 100111101, 100111011, 100110111, 100101111, 100011111 | 320*X |
| Size of the largest MRU not exceeding 3*996/Y | 320*X | 111111100, 111110011, 111001111, 100111111 | |
| Size of the largest MRU not exceeding (3*996+484)/Y | 320*X | 111111110, 111111101, 111111011, 111110111, 111101111, 111011111, 110111111, 101111111 | |
| Size of the largest RU not exceeding 4*996/Y | 320*X | 111111111 | |

In a possible implementation method, the partial bandwidth information field indicates to perform the measurement feedback on a channel other than a punctured channel within a full bandwidth range. The punctured channel is a channel on which the measurement feedback is not to be performed. The size of the RU or the MRU for the measurement feedback corresponds to a part of values of the binary format of the partial bandwidth information field.

In the foregoing solution, a full bandwidth feedback manner in a channel puncturing condition is designed, which helps implement a flexible full bandwidth feedback.

In a possible implementation method, a relationship between the first bandwidth and the size of the RU for the measurement feedback is as follows.

| First bandwidth (MHz) | Size of the RU for the measurement feedback |
|---|---|
| 20*X | Size of the largest RU not exceeding 242/Y |
| 40*X | Size of the largest RU not exceeding 484/Y |
| 80*X | Size of the largest RU not exceeding 996/Y |
| 160*X | Size of the largest RU not exceeding 2*996/Y |
| 320*X | Size of the largest RU not exceeding 4*996/Y |

In a possible implementation method:

| First bandwidth (MHz) | Size of the RU for the measurement feedback (Y=1) | Size of the RU for the measurement feedback (Y=4) |
|---|---|---|
| 20*X | 242 | 52 |
| 40*X | 484 | 106 |
| 80*X | 996 | 242 |
| 160*X | 2*996 | 484 |
| 320*X | 4*996 | 996 |

In a possible implementation method, the data field includes an NDPA frame. The NDPA frame does not include a partial bandwidth information field, and the partial bandwidth information field indicates a bandwidth on which the measurement feedback is to be performed.

In a possible implementation method, the data field includes an NDPA frame. The NDPA frame includes a partial bandwidth information field, and the partial bandwidth information field indicates to perform the measurement feedback within a full bandwidth range.

In a possible implementation method, the NDPA frame indicates X and/or Y.

In a possible implementation method, the NDPA frame indicates the measurement configuration.

In a possible implementation method, the subcarrier resolution is included in a first candidate set. The first candidate set is a candidate set, among a plurality of candidate sets, that corresponds to X and/or Y, and each of the plurality of candidate sets includes at least one candidate subcarrier resolution.

In the foregoing solution, the subcarrier resolution may be dynamically selected based on X and/or Y, and is applicable to subcarrier spacings of various sizes, which helps implement a correct channel measurement feedback.

In a possible implementation method, the plurality of candidate sets include a second candidate set and a third candidate set. A part or all of candidate subcarrier resolutions in the second candidate set have a multiple relationship with a part or all of candidate subcarrier resolutions in the third candidate set.

In a possible implementation method, the subcarrier resolution is one of a part of candidate subcarrier resolutions in a fourth candidate set, and the part of candidate subcarrier resolutions correspond to X and/or Y.

According to a third aspect, an embodiment of this application provides a communication apparatus. The apparatus may be a first device, or may be a module (for example, a chip) in the first device. The apparatus has a function of implementing the first aspect or any possible implementation method according to the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a second device, or may be a module (for example, a chip) in the second device. The apparatus has a function of implementing the second aspect or any possible implementation method according to the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or a means configured to perform the steps in any implementation method according to the first aspect and the second aspect.

According to a sixth aspect, an embodiment of this application provides a communication apparatus, including a processor and an interface circuit. The processor is configured to communicate with another apparatus through the interface circuit, and perform any implementation method according to the first aspect and the second aspect. There are one or more processors.

Optionally, the communication apparatus may further include a memory configured to store computer instructions. The memory is coupled to the processor, and the processor executes the computer instructions stored in the memory, to enable the apparatus to perform any implementation method according to the first aspect and the second aspect.

According to a seventh aspect, an embodiment of this application further provides a computer program product. The computer program product includes a computer program or instructions. When the computer program or the instructions are run by a communication apparatus, to enable any implementation method according to the first aspect and the second aspect to be performed.

According to an eighth aspect, an embodiment of this application further provides a computer-readable storage medium. The computer-readable storage medium stores instructions. When the instructions are run on a communication apparatus, any implementation method according to the first aspect and the second aspect is performed.

According to a ninth aspect, this application provides a chip (or a chip system). The chip includes a processor. The processor is coupled to a memory, and the memory stores a computer program. The processor is configured to invoke a part or all of the computer program in the memory, to enable any implementation method according to the first aspect and the second aspect to be performed.

According to a tenth aspect, this application provides a communication system, including a first device configured to perform the first aspect and any implementation method according to the first aspect, and a second device configured to perform the second aspect or any implementation method according to the second aspect.

### BRIEF DESCRIPTION OF DRAWINGS

FIG. 1 is a diagram of an application scenario according to an embodiment of this application;
FIG. 2 is a diagram of planning of a subcarrier of a 20 MHz PPDU in 802.11ac;
FIG. 3 is a diagram of planning of a subcarrier of a 20 MHz PPDU in 802.11ax and 802.11be;
FIG. 4 is a diagram of a 52-tone RU of a type a;
FIG. 5 is a diagram of a 52-tone RU of a type b;
FIG. 6 is a diagram of planning of a subcarrier of a 40MHz PPDU in 802.11ax and 802.11be;
FIG. 7 is a diagram of a PPDU format for 802.11ac VHT;
FIG. 8 is a diagram of a single user PPDU format for 802.11ax HE;
FIG. 9 is a diagram of a multi-user PPDU format for 802.11be EHT;
FIG. 10 is an example diagram of an EHT trigger-based sounding procedure;
FIG. 11 is an example diagram of an EHT non-trigger-based sounding procedure;
FIG. 12 is a diagram of a structure of an NDPA frame;
FIG. 13 is a diagram of a structure of a station information field of an HE NDPA frame;
FIG. 14 is a diagram of a partial bandwidth information field;
FIG. 15 is a diagram of a structure of a station information field of an EHT NDPA frame;
FIG. 16 is a diagram of a partial bandwidth information field;
FIG. 17 is a schematic flowchart of a communication method according to an embodiment of this application;
FIG. 18 is a diagram of a structure of a communication apparatus according to an embodiment of this application; and
FIG. 19 is a diagram of a structure of a communication apparatus according to an embodiment of this application.

### DESCRIPTION OF EMBODIMENTS

The following describes technical solutions of this application with reference to accompanying drawings.

The technical solutions provided in embodiments of this application are applicable to wireless local area network (wireless local area network, WLAN) scenarios, for example, supporting related standards of institute of electrical and electronics engineers (institute of electrical and electronics engineers, IEEE) 802.11, such as a 802.11a/b/g standard, a 802.11n standard, a 802.11ac standard, a 802.11ax standard, and next-generation Wi-Fi protocols of IEEE 802.11ax, such as 802.11be, Wi-Fi 7, extremely high throughput (extremely high throughput, EHT), 802.11ad, and 802.11ay, and such as next generation of 802.11be and Wi-Fi 8. The technical solutions provided in embodiments of this application are further applicable to an ultra wideband (ultra wideband, UWB)-based wireless personal area network system, for example, 802.15 series standards, are further applicable to sensing (sensing) systems, for example, 802.11bf series standards, are further applicable to an IEEE integrated millimeter wave (Integrated mmWave, IMMW) protocol, and are further applicable to a spark link/nearlink (spark link/ nearlink) standard protocol. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, a next-generation standard, and the like. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any appropriate wireless network.

The technical solutions in embodiments of this application are further applicable to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a 6th generation (6th generation, 6G) system, an internet of things (internet of things, IoT) network, or vehicle-to-everything (vehicle to x, V2X).

The foregoing communication systems applicable to this application are merely examples for description, and the communication systems applicable to this application are not limited thereto. This is described herein in a unified manner, and details are not described below again.

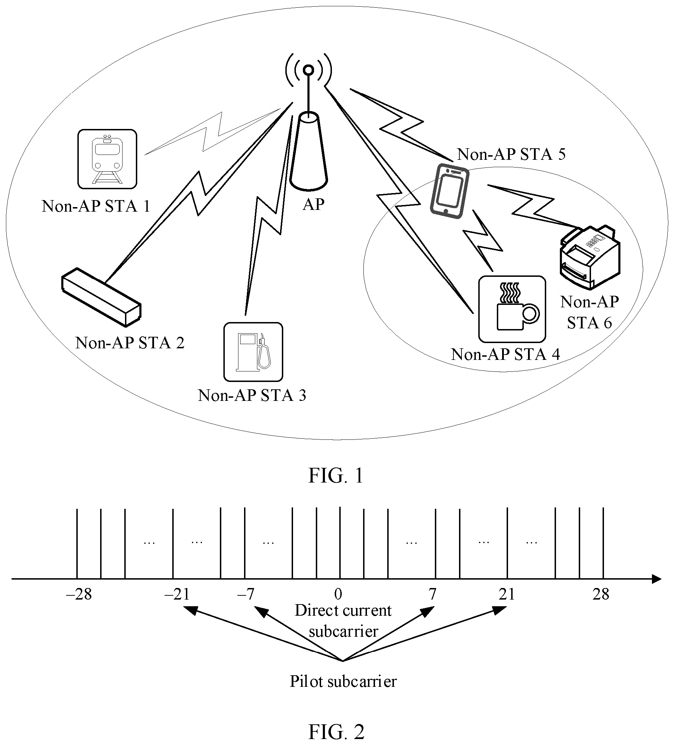

FIG. 1 is a diagram of an application scenario to which an embodiment of this application is applicable. As shown in FIG. 1, a communication method provided in this application is applicable to data communication between stations (station, STA). The station may be an access point (access point, AP) station, or may be a non-access point station (non-access point station, non-AP STA). The access point station and the non-access point station are referred to as an AP and a non-AP station for short respectively. Specifically, the solutions of this application are applicable to data communication between an AP and one or more non-AP stations (for example, data communication between an AP 1 and each of a non-AP STA 1 and a non-AP STA 2), and are also applicable to data communication between APs (for example, data communication between an AP and another AP in FIG. 1) and data communication between non-AP STAs (for example, data communication between a non-AP STA 4 and a non-AP STA 5 in FIG. 1).

The access point may be a node used by a terminal (like a mobile phone) to access a wired (or wireless) network, and is mainly deployed at home, in a building, and in a park. A typical coverage radius is tens of meters to 100-odd meters. Certainly, the access point may alternatively be deployed outdoors. The access point is equivalent to a bridge that connects a wired network and a wireless network, and is mainly used to connect various wireless network clients together and then connect the wireless network to the Ethernet.

Specifically, the access point may be a terminal or a network device with a Wi-Fi chip, or may be a terminal or a network device including a chip for accessing a wired (wireless) network. The network device may be a server, a router, a switch, a bridge, a computer, a mobile phone, a relay station, a vehicle-mounted device, a wearable device, a network device in a 5G network, a network device in a 6G network, a network device in a public land mobile communication network (public land mobile network, PLMN), or the like. This is not limited in embodiments of this application. The access point may be a device that supports a Wi-Fi standard. For example, the access point may also support one or more standards of IEEE 802.11 series, such as 802.11a, 802.11b, 802.11g, 802.11n, 802.11ac, 802.11ax, 802.11be, 802.11ad, 802.11ay, 802.11bf, and integrated millimeter wave that is currently being developed.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more standards of IEEE 802.11 series, such as 802.11a, 802.11b, 802.11g, 802.11n, 802.11ac, 802.11ax, 802.11be, 802.11ad, 802.11ay, 802.11bf, and integrated millimeter wave that is currently being developed.

For example, the non-AP station may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water/electricity meter in a smart home, and a sensor in a smart city.

The AP or the non-AP station may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

To help understand content of this application, the following describes nouns or terms used in this application.

### 1. Subcarrier planning of 802.11ac

802.11ac uses an orthogonal frequency division multiplexing (orthogonal frequency division multiplexing, OFDM) manner for low-frequency transmission and supports channel bandwidths (channel bandwidths, CBWs) of 20 megahertz (MHz), 40 MHz, 80 MHz, 160 MHz, and 80+80 MHz. Table 1 lists parameters for different bandwidths.

**Table 1**

| Parameter | CBW 20 MHz | CBW 40 MHz | CBW 80 MHz | CBW 80+80 MHz | CBW 160 MHz |
|---|---|---|---|---|---|
| N_{SD} | 52 | 108 | 234 | 234 | 468 |
| N_{SP} | 4 | 6 | 8 | 8 | 16 |

N_{SD} represents a quantity of data subcarriers (data subcarrier), and N_{SP} represents a quantity of pilot subcarriers (pilot subcarrier). A related parameter of CBW 80+80 MHz in Table 1 is data of a single segment (segment). Therefore, a total quantity of data subcarriers of CBW 80+80 MHz is 468, and a total quantity of pilot subcarriers is 16.

A location (also referred to as an index) of a data subcarrier and a location of a pilot subcarrier are shown as follows:
20 MHz PPDU: [-28:-1] and [1:28];
40 MHz PPDU: [-58:-2] and [2:58];
80 MHz PPDU: [-122:-2] and [2:122];
160 MHz PPDU: [-250:-130], [-126:-6], [6:126], and [130:250]; and
80+80 MHz PPDU: Relative locations of a data subcarrier and a pilot subcarrier in each 80 MHz segment are consistent with those of the 80 MHz PPDU.

The location of the pilot subcarrier is as follows.
20 MHz PPDU: {±7, ±21};
40 MHz PPDU: {±11, ±25, ±53};
80 MHz PPDU: {±11, ±39, ±75, ±103};
160 MHz PPDU: {±25, ±53, ±89, ±117, ±139, ±167, ±203, ±231}; and
80+80 MHz PPDU: The relative location of the pilot subcarrier in each 80 MHz segment is consistent with that of the 80 MHz PPDU.

FIG. 2 is a diagram of planning of a subcarrier of a 20 MHz PPDU in 802.11ac. The 20 MHz PPDU corresponds to 64 subcarriers, and specifically includes 52 data subcarriers, four pilot subcarriers, one direct current component subcarrier (direct current subcarrier, DC subcarrier), and seven guard (guard) subcarriers. The direct current component subcarrier is also referred to as a direct current subcarrier or a DC for short. The seven guard subcarriers are located on two sides. For example, there are four guard subcarriers on a left side of -28 in FIG. 2, and there are three guard subcarriers on a right side of 28. FIG. 2 shows the 52 data subcarriers, the four pilot subcarriers, and the direct current subcarrier, and does not show the seven guard subcarriers. As shown in FIG. 2, a location of the direct current subcarrier is {0}, locations of the four pilot subcarriers are {±7, ±21}, and locations of the 52 data subcarriers are locations other than {0, ±7, ±21} in [-28, 28].

802.11 ac has a small quantity of pilot subcarriers in subcarrier planning, which is not conducive to directly using this solution or the solution with an increased subcarrier spacing for transmission at a high frequency.

### 2. Subcarrier planning and RUs of 802.11ax and 802.11be

802.11be and 802.11ax have consistent subcarrier planning for 20 MHz and 40 MHz PPDUs. However, when a PPDU bandwidth is greater than or equal to 80 MHz, subcarrier planning of a PPDU in 802.1 The is slightly different from that of a PPDU in 802.11ax. For details, see related descriptions of 802.11be and 802.11ax.

A concept of RU is introduced in the subcarrier planning solutions of 802.11ax and 802.11be. This concept is introduced to support orthogonal frequency division multiple access (orthogonal frequency division multiple access, OFDMA). To be specific, when resources are allocated to a user, an entire frequency band resource may not be allocated to one or more users at a same time, but different resource units may be allocated to the one or more users.

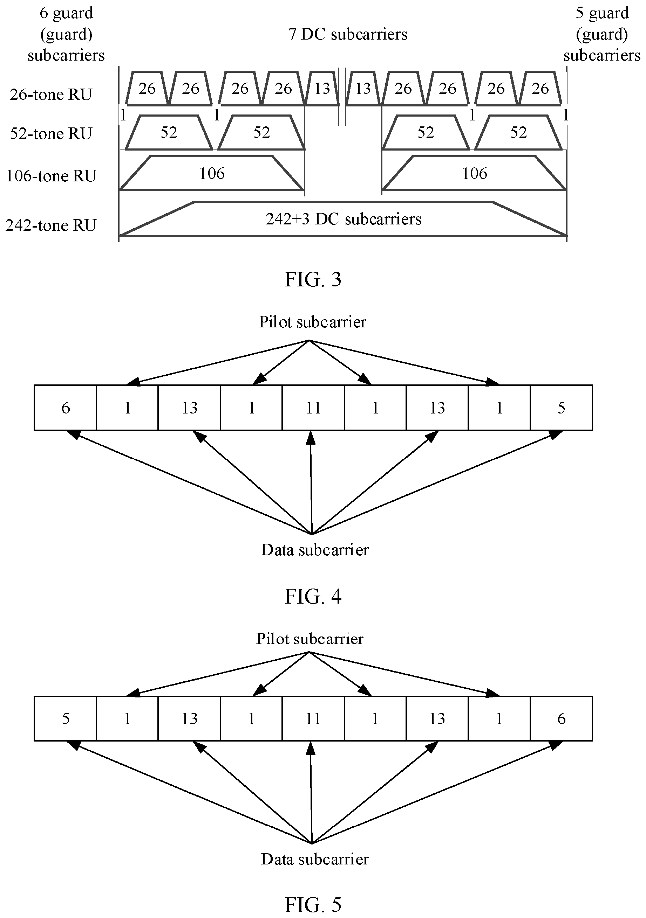

FIG. 3 is a diagram of planning of a subcarrier of a 20 MHz PPDU in 802.11ax and 802.11be. The 20 MHz PPDU corresponds to 256 subcarriers, and the 256 subcarriers are divided in a plurality of manners. For example, the following provides four different division manners, which are respectively as follows.

Manner 1: The 256 subcarriers are divided into nine RUs, seven direct current subcarriers, four null subcarriers, and 11 guard (guard) subcarriers. Each RU includes 26 subcarriers, and specifically includes 24 data subcarriers and two pilot subcarriers. Each RU is also referred to as a 26-tone (tone) RU.

Manner 2: The 256 subcarriers are divided into four RUs, 33 direct current subcarriers, four null subcarriers, and 11 guard subcarriers. Each RU includes 52 subcarriers, and specifically includes 48 data subcarriers and four pilot subcarriers. Each RU is also referred to as a 52-tone (tone) RU.

Manner 3: The 256 subcarriers are divided into two RUs, 33 direct current subcarriers, and 11 guard subcarriers. Each RU includes 106 subcarriers, and specifically includes 102 data subcarriers and four pilot subcarriers. Each RU is also referred to as a 106-tone (tone) RU.

Manner 4: The 256 subcarriers are divided into one RU, three direct current subcarriers, and 11 guard subcarriers. Each RU includes 242 subcarriers, and specifically includes 234 data subcarriers and eight pilot subcarriers. Each RU is also referred to as a 242-tone (tone) RU.

In the foregoing four division manners, sizes of the RUs obtained through division are the same. In another division manner, sizes of the RUs may alternatively be different. For example, 256 subcarriers are divided into three 26-tone RUs, three 52-tone RUs, a direct current subcarrier, and a guard subcarrier. Herein, tone indicates a subcarrier. For a plurality of different specific division manners of the 256 subcarriers, refer to descriptions of Table 27-26-RU Allocation subfield in 802.11ax.

Table 2 below provides an example of a relationship between subcarrier locations and RUs of the PPDU in the 20 MHz bandwidth.

**Table 2**

| RU type | RU index and subcarrier range | | | | |
|---|---|---|---|---|---|
| 26-tone RU | RU 1 [-121:-96] | RU 2 [-95:-70] | RU 3 [-68:-43] | RU 4 [-42:-17] | RU 5 [-16:-4, 4:16] |
| | RU 6 [17:42] | RU 7 [43:68] | RU 8 [70:95] | RU 9 [96:121] | |
| 52-tone RU | RU 1 [-121:-70] | RU 2 [-68:-17] | RU 3 [17:68] | RU 4 [70:121] | |
| 106-tone RU | RU 1 [-121:-17] | | RU 2 [17:122] | | |
| 242-tone RU | RU 1 [-122:-2, 2:122] | | | | |

It can be learned from Table 2 that, the 26-tone RU is used as an example, locations of 26 subcarriers of the RU 1 are [-121:-96], locations of 26 subcarriers of the RU 2 are [-95:-70], and the rest is similar. Details are not described.

The 52-tone RU is used as an example, and locations of pilot subcarriers in four 52-tone RUs in the 20 MHz PPDU are respectively as follows.

The locations of the pilot subcarriers in the RU 1 of the 52-tone RUs are (-116, -102, -90, -76}.

The locations of the pilot subcarriers in the RU 2 of the 52-tone RUs are {-62, -48, -36, -22}.

The locations of the pilot subcarriers in the RU 3 of the 52-tone RUs are {22, 36, 48, 62}.

The locations of the pilot subcarriers in the RU 4 of the 52-tone RUs are {76, 90, 102, 116}.

The 52-tone RU is classified into a type-a 52-tone RU (as shown in FIG. 4) and a type-b 52-tone RU (as shown in FIG. 5). The type-a 52-tone RU is sequentially: six data subcarriers, one pilot subcarrier, 13 data subcarriers, one pilot subcarrier, 11 data subcarriers, one pilot subcarrier, 13 data subcarriers, one pilot subcarrier, and five data subcarriers. The type-b 52-tone RU is sequentially: five data subcarriers, one pilot subcarrier, 13 data subcarriers, one pilot subcarrier, 11 data subcarriers, one pilot subcarrier, 13 data subcarriers, one pilot subcarrier, and six data subcarriers.

It can be learned from Table 2 that, types of the four 52-tone RUs in 20 MHz are sequentially: the type b, the type a, the type b, and the type a.

In 802.11be, each RU may be allocated to one or more users, and each user may be allocated one or more RUs. FIG. 3 is used as an example. For a 20 MHz PPDU, nine 26-tone RUs may be allocated to a total of nine users, or one 106-tone RU may be allocated to one or more users. In 802.11be, further, an MRU configuration is further supported. To be specific, a plurality of RUs are allocated to one or more users at the same time. A specific supported MRU configuration may be 52+26, 106+26, 484+242, 996+484, 2*996+484, 3*996+484, 3*996, 242+484+996, or the like. 52+26 indicates that one 52-tone RU and one 26-tone RU form one MRU. Others are similar, and details are not described.

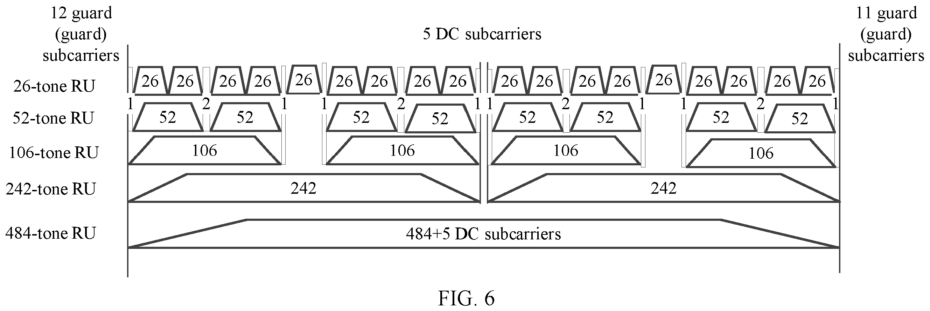

FIG. 6 is a diagram of planning of a subcarrier of a 40 MHz PPDU in 802.11ax and 802.11be. A principle of planning of the subcarrier of the 40 MHz PPDU is similar to that of planning of the subcarrier of the 20 MHz PPDU. For detailed descriptions, refer to related descriptions of 802.11ax and 802.11be. Details are not described herein again. For planning of a subcarrier of a PPDU with a bandwidth greater than 40 MHz, refer to related descriptions of 802.11ax and 802.11be.

### 3. Low-frequency PPDU

The WLAN already has many low-frequency standards, such as 802.11a/b/g, 802.11n, 802.11ac, 802.11ax, 802.11be, and the like. At present, a continuously evolving low-frequency PPDU format basically adopts an OFDM modulation manner from beginning to end.

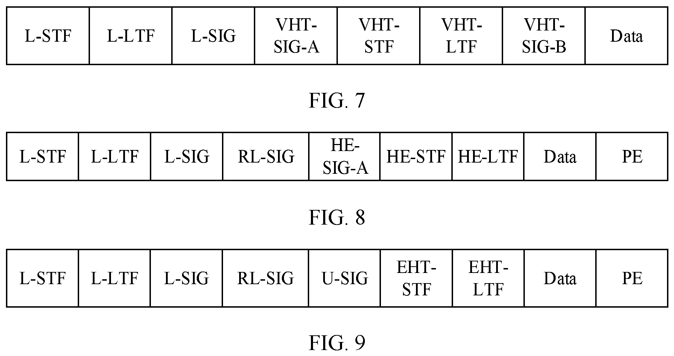

FIG. 7 is a diagram of a PPDU format for 802.11ac VHT. The PPDU includes the following fields: a legacy short training field (Legacy Short Training Field, L-STF), a legacy long training field (Legacy Long Training Field, L-LTF), a legacy signal (Legacy Signal, L-SIG) field, a VHT signal-A (VHT Signal-A, VHT-SIG-A) field, a VHT short training field (VHT short training field, VHT-STF), a VHT long training field (VHT long training field, VHT-LTF), a VHT signal-B (VHT Signal-B, VHT-SIG-B) field, and a data (Data) field. Fields before the data field are collectively referred to as a preamble, that is, the preamble includes the L-STF, the L-LTF, the L-SIG field, the VHT-SIG-A field, the VHT-STF, the VHT-LTF, and the VHT-SIG-B field.

FIG. 8 is a diagram of a single user (Signal User, SU) PPDU format for 802.11ax HE. The PPDU includes the following fields: a legacy short training field (L-STF), a legacy long training field (L-LTF), a legacy signal (L-SIG) field, and a repeated legacy signal (Repeated Legacy Signal, RL-SIG) field, an HE signal-A (HE Signal-A, HE-SIG-A) field, an HE short training field (HE-STF), an HE long training field (HE-LTF), a data (Data) field, and a packet extension (Packet Extension, PE) field. Fields before the data field are collectively referred to as a preamble, that is, the preamble includes the L-STF, the L-LTF, the L-SIG field, the RL-SIG field, the HE-SIG-A field, the HE-STF, and the HE-LTF.

FIG. 9 is a diagram of a multi-user (Multi-User, MU) PPDU format for 802.11be EHT. The PPDU includes the following fields: a legacy short training field (L-STF), a legacy long training field (L-LTF), a legacy signal (L-SIG) field, a repeated legacy signal (RL-SIG) field, a universal signal (Universal signal, U-SIG) field, an EHT short training field (EHT-STF), an EHT long training field (EHT-LTF), a data (Data) field, and a packet extension (PE) field. Fields before the data field are collectively referred to as a preamble, that is, the preamble includes the L-STF, the L-LTF, the L-SIG field, the RL-SIG field, the U-SIG field, the EHT-STF, and the EHT-LTF.

FIG. 7 to FIG. 9 are merely examples. Other PPDU formats are not listed, but are similar to the foregoing formats. The formats basically include a conventional preamble (including the L-STF, the L-LTF, and the L-SIG field), a next-generation preamble (such as the U-SIG field, the EHT-STF, and the EHT-LTF), the data (Data) field, and the like.

### 4. PPDU of an upclocking version

Because a pure OFDM transmission manner is widely used in a low frequency, which is not similar to a pure single carrier (single carrier, SC) transmission manner or an SC+OFDM transmission manner that is based on an existing high-frequency standard such as 802.11ad and 802.11ay, it is difficult to reuse a plurality of baseband designs of the low frequency by a high frequency. This causes extra complexity to a device that implementing both the low frequency and the high frequency. Therefore, there is now a tendency for a high-frequency PPDU and a low-frequency PPDU to adopt a same PPDU format.

In high-frequency communication of a WLAN, a proposal has been proposed to adopt an "upclocking (upclocking)" version of the low-frequency PPDU as the high-frequency PPDU for transmission, to better utilize an existing PPDU design in a low frequency. Because the low-frequency PPDU has been widely implemented, this solution in which the low-frequency PPDU can be reused has a considerable commercial advantage.

"Upclocking" is to shorten an interval between sending points. When a quantity of sending points remains unchanged, a period corresponding to a same quantity of sending points is shortened. Because the period is in a reciprocal relationship with a subcarrier spacing, the subcarrier spacing is increased. The subcarrier spacing needs to be increased because a larger subcarrier spacing can mitigate impact caused by a larger carrier frequency offset, phase noise, and the like at a high frequency, thereby helping improve high frequency communication performance.

Factors that affect communication quality, such as a carrier frequency offset and phase noise, are closely related to device hardware capabilities. That is, a common device may require a larger subcarrier spacing to overcome impact of these factors, but a good device may not need such a large subcarrier spacing (a smaller subcarrier spacing is used to achieve a higher rate in a case of a same bandwidth and a same guard interval). In addition, different channel environments may have different multipath delays, which affects selection of a guard interval and a subcarrier spacing.

A VHT PPDU shown in FIG. 7 is used as an example, the VHT PPDU may be transmitted over 20 MHz, 40 MHz, 80 MHz, and 160 MHz, the subcarrier spacing is 312.5 kHz, a symbol period is 3.2 microseconds (µs), each 20 MHz corresponds to 64 points, and each point is spaced by 0.05 microseconds. When 4x upclocking and 8x upclocking are used, a PPDU of an upclocking version of 802.11ac is shown in first two columns in Table 3 (a subcarrier spacing is increased, and a period corresponding to a same quantity of sent points is shortened).

802.11be is shown in a 3^{rd} column (16x upclocking) in Table 3 and is similar to 802.11ac, except that a subcarrier spacing in the EHT-STF and a subsequent field like a data field changes to 78.125 kHz, corresponding to 256 points in each 20 MHz (1.25 MHz in the 3^{rd} column=78.125 kHz*16).

**Table 3**

| | 4x 802.11ac | 8x 802.11ac | 16x 802.11be |
|---|---|---|---|
| Bandwidth | 80/160/320/640 MHz | 160/320/640/1280 MHz | 320/640/1280/2560/5120 MHz |
| Subcarrier spacing | 1.25 MHz | 2.5 MHz | 1.25 MHz |
| IDFT/DFT period | 800 nanoseconds (ns) | 400 ns | 800 ns |
| IDFT/DFT size | 64/128/256/512 | 64/128/256/512 | 256/512/1024/2048/4096 |

In Table 3, IDFT represents inverse discrete Fourier transform (Inverse Discrete Fourier Transform), and DFT represents discrete Fourier transform (Discrete Fourier Transform).

### 5. Sounding (sounding) procedure

An EHT sounding procedure is used as an example, and may be classified into EHT trigger-based sounding (trigger-based sounding, TB Sounding) and EHT non-trigger-based sounding (non-trigger-based sounding, non-TB Sounding).

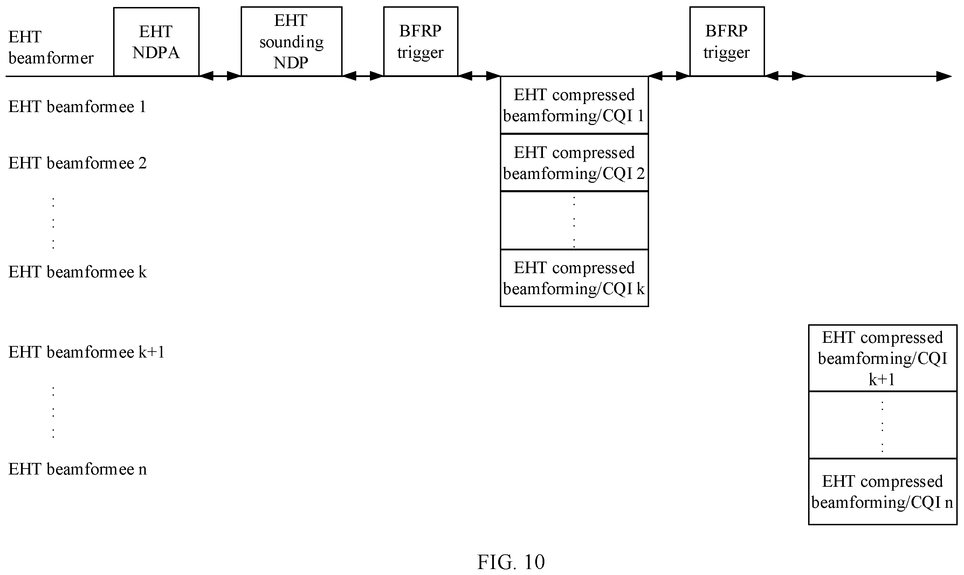

FIG. 10 is an example diagram of an EHT trigger-based sounding procedure. An EHT sounding initiator (for example, a beamformer (beamformer)) may initiate the EHT trigger-based sounding procedure, to obtain one or more types of feedbacks related to a channel measurement, such as a single user (SU), a multi-user (MU), or channel quality information (Channel Quality Information, CQI), from an EHT sounding responder (for example, a beamformee (beamformee)).

The sounding procedure includes the following operations.
1. The beamformer sends a PPDU.
   A data field of the PPDU includes an EHT null data physical layer protocol data unit announcement (Null Data Physical Layer Protocol Data Unit Announcement, NDPA) frame (referred to as the NDPA frame for short below). The NDPA frame is used to notify the beamformee that the beamformer is to send a null data physical layer protocol data unit (Null Data Physical Layer Protocol Data Unit, NDP), a related parameter of the NDP, and a parameter that needs to be fed back by the beamformee.
2. The beamformer sends an EHT sounding NDP (referred to as the NDP for short below).
   The NDP is used by the beamformee for perform a measurement, and the NDP may be understood as a PPDU that does not include a data field.
3. The beamformer sends a beamforming report poll (Beamforming Reporting Poll, BFRP) trigger (BFRP Trigger) frame.
   The BFRP trigger frame is used to trigger the beamformee to perform a feedback.
4. The beamformer receives a channel measurement feedback result sent by the beamformee.

The beamformee may determine, based on the NDPA frame, how to perform the feedback.

The beamformee sends the channel measurement feedback result by using an EHT compressed beamforming frame (Compressed Beamforming Frame) or an EHT CQI frame.

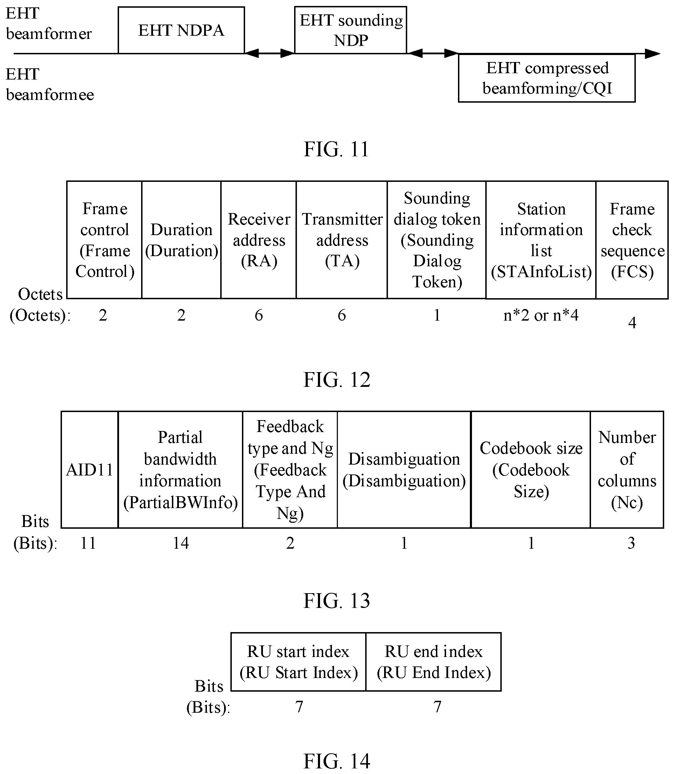

FIG. 11 is an example diagram of an EHT non-trigger-based sounding procedure. An EHT probe initiator (for example, a beamformer (beamformer)) initiates the EHT non-trigger-based sounding procedure to obtain one or more types of feedbacks related to a channel measurement, such as an SU or CQI, from a specific EHT sounding responder (for example, a beamformee (beamformee)).

In addition, an HE sounding procedure is similar to the EHT sounding procedure. Details are not described again. A VHT non-trigger-based sounding procedure is similar to the HE and EHT non-trigger-based sounding procedures. Details are not described again. In addition, the VHT does not have a trigger-based sounding procedure.

### 6. NDPA frame

FIG. 12 is a diagram of a structure of the NDPA frame. One Octet corresponds to eight bits (bits). The NDPA frame includes one or more of the following fields: a frame control (Frame Control) field, a duration (Duration) field, a receiver address (Receiver Address, RA) field, a transmitter address (Transmitter Address, TA) field, a sounding dialog token (Sounding Dialog Token) field, a station information list (STAInfoList) field, and a frame check sequence (Frame Check Sequence, FCS) field.

The frame control field carries frame control-related information, such as a frame type and a subtype. The duration field is used to notify duration information. The receiver address field includes a medium access control (medium access control, MAC) address of a receiver. The transmitter address field includes a MAC address of a sender. The sounding dialog token field is used to identify an NDPA type. The station information list field includes n station information fields, and n is a positive integer. For a VHT NDPA, each station information field corresponds to two Octets. For an HE NDPA and an EHT NDPA, each station information field corresponds to four Octets.

FIG. 13 is a diagram of a structure of the station information field of the HE NDPA frame. The station information field includes the following fields: an AID11 field, a partial bandwidth information (PartialBWInfo) field, a feedback type and Ng (Feedback Type and Ng) field, a disambiguation (Disambiguation) field, a codebook size (Codebook Size) field, and a number of columns (Nc) field.

The AID11 field is used to identify a station. The partial bandwidth information field indicates information about a bandwidth on which the measurement feedback is to be performed. The feedback type and Ng field and the codebook size field jointly indicate the following information: a feedback type, Ng, and a codebook size. Ng represents a subcarrier resolution for a measurement feedback, that is, indicates to perform the measurement feedback once every Ng consecutive subcarriers. It may be understood that Ng indicates that every Ng consecutive subcarriers are grouped into a group, and the measurement feedback is performed once for each group. Based on the feedback method, a total quantity of measurement feedbacks can be reduced. It should be noted that, the subcarrier resolution for a measurement feedback indicated by Ng is for the whole. That is, in most cases, the measurement feedback is performed once every Ng consecutive subcarriers, but in a few cases, the measurement feedback is allowed not to be performed once every Ng consecutive subcarriers. The disambiguation field is used to disambiguate identification of the station information field. The number of columns field is used to notify a quantity of columns of a feedback matrix.

When a value of the AID11 field is equal to 2047, a corresponding station information field is used to describe an available 20 MHz subchannel.

When the value of the AID11 field is not equal to 2047, the AID11 field is used to describe association identifier (association identifier, AID) information of an actual station, and a corresponding station information field is used to notify a user of a related configuration during the feedback. A partial bandwidth information field in the station information field is used as an example. FIG. 14 shows specific content of 14 bits of the partial bandwidth information field. The partial bandwidth information field notifies a feedback range by using a resolution of a 26-tone RU, and indicates, by using an RU start index (RU Start Index) and an RU end index (RU End Index), subcarriers on which the feedback needs to be performed. A start subcarrier and an end subcarrier of the feedback corresponding to each 26-tone RU are also defined in the standard. Table 4 below provides an RU range of a 20 MHz bandwidth.

It should be noted that there is an RU range in another bandwidth (for example, 40 MHz, 80 MHz, or 160 MHz). Details are not described again.

**Table 4**

| RU index (RU Index) | 20 MHz | |
|---|---|---|
| | Start (Start) | End (End) |
| 0 | -122 | -84 |
| 1 | -100 | -68 |
| 2 | -68 | -36 |
| 3 | -52 | -4 |
| 4 | -20 | 20 |
| 5 | 4 | 52 |
| 6 | 36 | 68 |
| 7 | 68 | 100 |
| 8 | 84 | 122 |

In addition, total feedback ranges corresponding to different bandwidth ranges in 802.11ax are defined in Table 5 below.

**Table 5**

| Channel bandwidth (Channel bandwidth) | Ng | Superset of subcarrier indices (Superset of subcarrier indices (*scidx*)) |
|---|---|---|
| 20 MHz | 4 | -122, -120, -116, ..., -8, -4, -2, 2, 4, 8, ..., 116, 120, 122 |
| | 16 | -122, -116, -100, ..., -20, -4, -2, 2, 4, 20, ..., 100, 116, 122 |
| 40 MHz | 4 | -244, -240, ..., -8, -4, 4, 8, ..., 240, 244 |
| | 16 | -244, -228, ..., -20, -4, 4, 20, ..., 228, 244 |
| 80 MHz | 4 | -500, -496, ..., -8, -4, 4, 8, ..., 496, 500 |
| | 16 | -500, -484, ..., -20, -4, 4, 20, ..., 484, 500 |
| 160 MHz | 4 | -1012, -1008, ..., -520, -516, -508, -504, ..., -16, -12, 12, 16, ..., 504, 508, 516, 520, ..., 1008, 1012 |
| | 16 | -1012, -996, ..., -532, -516, -508, -492, ..., -28, -12, 12, 28, ..., 492, 508, 516, 532, ..., 996, 1012 |
| 80+80 MHz | 4 | -500(L), -496(L), ..., -8(L), -4(L), 4(L), 8(L), ..., 496(L), 500(L), -500(H), -496(H), ..., -8(H), -4(H), 4(H), 8(H), ..., 496(H), 500(H) |
| | 16 | -500(L), -484(L), ..., -20(L), -4(L), 4(L), 20(L), ..., 484(L), 500(L), -500(H), -484(H), ..., -20(H), -4(H), 4(H), 20(H), ..., 484(H), 500(H) |
| Note 1: *x*(L) represents a subcarrier index x in a frequency segment lower in frequency, and *x*(H) represents a subcarrier index x in a frequency segment higher in frequency (*x*(L) denotes subcarrier index *x* in the frequency segment lower in frequency, and *x*(H) denotes subcarrier index *x* in the frequency segment higher in frequency). | | |
| Note 2: "..." represents an arithmetic progression in Ng increments ("..." denotes an arithmetic progression in *Ng* increments). | | |
| Note 3: Pilot subcarriers are not skipped (Pilot subcarriers are not skipped). | | |

For example, for the 20 MHz bandwidth, with reference to FIG. 14, Table 4, and Table 5, an index of a subcarrier that needs to be fed back may be indicated. Specifically, an RU start index and an RU end index in a partial bandwidth information field in FIG. 14 may be obtained from Table 4. In addition, with reference to Table 5, the index of the subcarrier, specifically indicated by the partial bandwidth information field, that needs to be fed back may be obtained. For example, a value of the RU start index in FIG. 14 is -100 in Table 4, and a value of the RU end index in FIG. 14 is 100 in Table 4, indicating that a range of the index of the subcarrier that needs to be fed back is [-100, 100], that is, indices 1 to 7 of the 26-tone RU. Then, with reference to Table 5, when the channel bandwidth is equal to 20 MHz, if a value of Ng is 4, indices of subcarriers that actually need to be fed back include: -100, -96, -92, ..., -4, -2, 2, 4, ..., 92, 96, and 100; and if the value of Ng is 16, the indices of the subcarriers that actually need to be fed back include: -100, -84, -68, ..., -4, -2, 2, 4, ..., 68, 84, and 100. It may be learned that the subcarrier that needs to be fed back is also affected by the value of Ng.

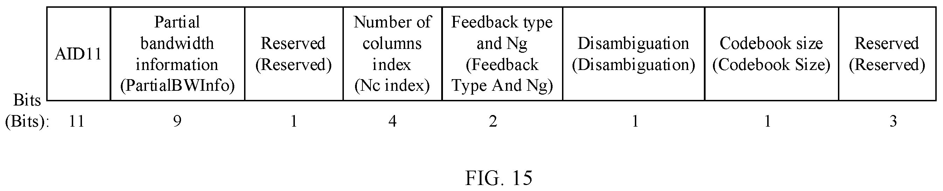

FIG. 15 is a diagram of a structure of the station information field of the EHT NDPA frame. The station information field includes the following fields: an AID11 field, a partial bandwidth information (PartialBWInfo) field, a reserved field, a number of columns index (Nc index) field, a feedback type and Ng (Feedback Type And Ng) field, a disambiguation (Disambiguation) field, a codebook size (Codebook Size) field, and a reserved field.

The partial bandwidth information field indicates a range of a bandwidth on which the measurement feedback is to be performed. For detailed descriptions, refer to subsequent examples. For meanings of other fields in the station information field, refer to meanings of corresponding fields in the HE NDPA frame shown in FIG. 13. Details are not described again.

When a value of the AID11 field is equal to 2047, a corresponding station information field is used to describe an available 20 MHz subchannel.

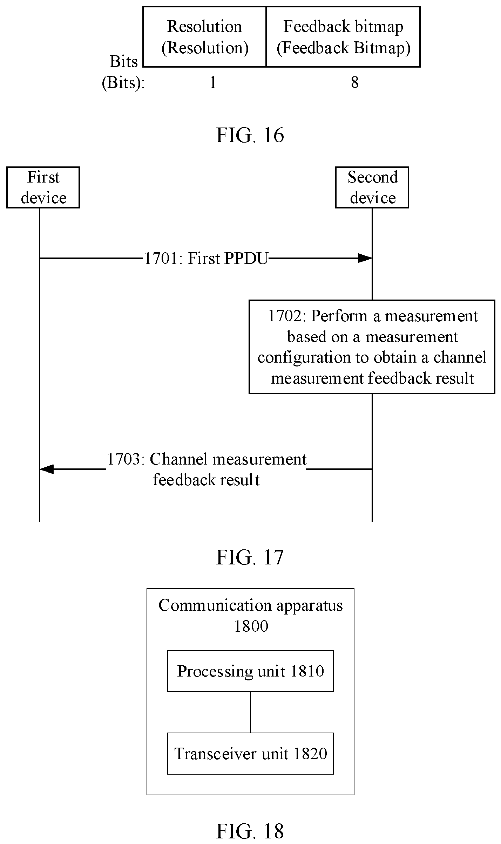

When the value of the AID11 field is not equal to 2047, the AID11 field is used to describe AID information of an actual station, and a corresponding station information field is used to notify a user of a related configuration during the feedback. A partial bandwidth information field in the station information field is used as an example. FIG. 16 shows specific content of 9 bits of the partial bandwidth information field. The partial bandwidth information field includes a resolution (Resolution) field and a feedback bitmap (Feedback Bitmap) field. The resolution field occupies 1 bit, and the feedback bitmap field occupies 8 bits. The nine bits of the partial bandwidth information field indicate subcarriers, in which bandwidth ranges, for which the feedback needs to be performed. Specific subcarriers, in the bandwidth ranges indicated by the partial bandwidth information field, that need to be fed back may be limited by using another definition in the EHT standard, and a subcarrier range is also affected by a value of Ng.

Specifically, the resolution field indicates whether the resolution is 20 MHz or 40 MHz. When a value of the resolution field is 0, it indicates the resolution of 20 MHz, that is, a PPDU bandwidth is divided into one or more 20 MHz, and then a feedback bitmap indicates whether each 20 MHz includes a subcarrier that needs to be fed back. When the value of the resolution field is 1, it indicates the resolution of 40 MHz, that is, the PPDU bandwidth is divided into one or more 40 MHz, and then the feedback bitmap indicates whether each 40 MHz includes the subcarrier that needs to be fed back.

Table 6 below provides a configuration example of the partial bandwidth information field of the EHT NDPA frame defined in the EHT standard.

**Table 6**

| Feedback RU or MRU size (Feedback RU or MRU size) | Bandwidth of the PPDU carrying the EHT NDPA frame (Bandwidth of the PPDU carrying the EHT NDP Announcement frame (MHz)) | Binary format of the PartialBWInfo field (PartialBWInfo subfield B1 values B2 B3 in binary B4 B5 format B6 B7 (B0 B8)) | Operating bandwidth of the beamformee (Operating channel bandwidth of the EHT beamformee (MHz)) |
|---|---|---|---|
| 242 | 20 | 010000000 | 20,40,80,160,320 |
| | 40 | 010000000, 001000000 | |
| | 80 | 010000000, 001000000, 000100000, 000010000 | 20,80,160,320 |
| | 160 | 010000000, 001000000, 000100000, 000010000, 000001000, 000000100, 000000010, 000000001 | |
| 484 | 40 | 011000000 | 40,80,160,320 |
| | 80 | 011000000,000110000 | 80,160,320 |
| | 160 | 011000000,000110000,0000 01100,000000011 | |
| | 320 | 110000000,101000000,1001 00000,100010000, 100001000,100000100,1000 00010,100000001 | |
| 484+242 | 80 | 011100000,011010000,0101 10000,001110000 | |
| | 160 | 011100000,011010000,0101 10000,001110000, 000001110,000001101,0000 01011,000000111 | |
| 996 | 80 | 011110000 | |
| | 160 | 011110000,000001111 | |
| | 320 | 111000000,100110000,1000 01100,100000011 | |
| 996+484 | 160 | 011111100,011110011,0110 01111,000111111 | 160, 320 |
| | 320 | 111100000,111010000,1101 10000,101110000, 100001110,100001101,1000 01011,100000111 | |
| 996+484+242 | 160 | 011101111,011011111,0101 11111,001111111, 011111110,011111101,0111 11011,011110111 | |
| 2*996 | 160 | 011111111 | |
| | 320 | 111110000,100001111 | |
| 2*996+484 | 320 | 111111000,111110100,1111 01100,111011100, 110111100,101111100,1001 11110,100111101, 100111011,100110111,1001 01111,100011111 | 320 |
| 3*996 | 320 | 111111100,111110011,1110 01111,100111111 | |
| 3*996+484 | 320 | 111111110,111111101,1111 11011,111110111, 111101111,111011111,1101 11 | |
| | | 111,101111111 | |
| 4*996 | 320 | 111111111 | |

The foregoing describes meanings of the partial bandwidth information fields in the NDPA frames in the HE standard and the EHT standard. The field may indicate a feedback range of channel-related information in frequency domain, which is obtained through a measurement based on an NDP in a specific bandwidth, and may further correspond to a specific subcarrier index based on a size of Ng. In addition, the foregoing are feedback solutions for a low frequency.

In addition, for the size of Ng, a definition is also provided in the standard. A size of Ng supported by feedbacks of the sounding procedures of the HE standard and the EHT standard is 4 or 16; and a size of Ng supported by a feedback of the sounding procedure of the VHT standard is 1, 2, or 4. This is because in the HE standard and the EHT standard, each 20 MHz corresponds to 256 points, and a subcarrier spacing is 78.125 kHz. However, in the VHT standard, each 20 MHz corresponds to 64 points, and a subcarrier spacing is 312.5 kHz. In the HE standard and the EHT standard, the subcarrier spacing is small. Therefore, the size of Ng is large, and spaced subcarriers for the feedback are sparse. In the VHT standard, the subcarrier spacing is large. Therefore, the size of Ng is small, and spaced subcarriers for the feedback are dense.

The HE standard and the EHT standard are used as examples, and the size of Ng may be indicated as shown in Table 7. Table 7 is content jointly indicated by a feedback type and Ng field (that is, a bit 25 and a bit 26) and a codebook size field (that is, a bit 28) in the NDPA frame in the trigger-based sounding of the HE standard and the EHT standard.

**Table 7**

| Feedback Type and Ng | | Codebook size | Description |
|---|---|---|---|
| B25 | B26 | B28 | |
| 0 | 0 | 0 | SU, *Ng*=4, quantizationresolution (φ, ψ)={4, 2} |
| 0 | 0 | 1 | SU, *Ng*=4, quantizationresolution (φ, ψ)={6, 4} |
| 0 | 1 | 0 | SU, *Ng*=16, quantizationresolution (φ, ψ)={4, 2} |
| 0 | 1 | 1 | SU, *Ng*=16, quantizationresolution (φ, ψ)={6, 4} |
| 1 | 0 | 0 | MU, *Ng*=4, quantizationresolution (φ, ψ)={7, 5} |
| 1 | 0 | 1 | MU, *Ng*=4, quantizationresolution (φ, ψ)={9, 7} |
| 1 | 1 | 0 | CQI |
| 1 | 1 | 1 | MU, *Ng*=16, quantizationresolution (φ, ψ)={9, 7} |

Currently, the size of Ng is usually fixed. For example, for the HE standard and the EHT standard, the size of Ng is 4 or 16, and for the VHT standard, the size of Ng is 1, 2, or 4.

It may be learned from the foregoing descriptions that, in a preliminary design of an integrated millimeter wave standard for a WLAN, a proposal has been proposed to adopt an "upclocking (upclocking)" version of a low-frequency PPDU as a high-frequency PPDU for transmission, to better utilize an existing PPDU design in a low frequency. In the present invention, a subcarrier spacing of a data field of the high-frequency PPDU is variable, and a subcarrier spacing of a corresponding data field may be set based on a capability of a communication device. For an application scenario in which a high-frequency PPDU is designed by using a low-frequency PPDU, how to perform a measurement feedback for the high-frequency PPDU needs to be studied.

To resolve this problem, this application provides corresponding embodiments. The following provides detailed descriptions.

FIG. 17 is a schematic flowchart of a communication method according to an embodiment of this application. The method is performed by a first device or a module (for example, a chip) in the first device, and a second device or a module (for example, a chip) in the second device. The following uses an example in which the first device and the second device perform the method for description.

In this embodiment of this application, the first device and the second device may also be respectively referred to as a beamformer and a beamformee. For example, the first device is a station (namely, an AP-type station or a non-AP-type station), and the second device is another station (namely, an AP-type station or a non-AP-type station). Certainly, the first device and the second device may alternatively be devices of another type. Specific types of the first device and the second device are not limited in this application.

The method includes the following steps.

Step 1701: The first device sends a first PPDU to the second device. Correspondingly, the second device receives the first PPDU.

For example, the first device sends the first PPDU to the second device on a channel corresponding to a first bandwidth. The first PPDU may be a PPDU including an NDPA frame. The NDPA frame is used to notify the second device of at least one of an NDP to be sent by the first device, a related parameter of the NDP, and a parameter that needs to be fed back by the second device. It may be understood that the first PPDU indicates the second device how to perform a channel measurement and feed back a measurement result.

Alternatively, the first PPDU may be a PPDU including data content. It may be understood that the first PPDU is a PPDU used to normally send data. In this case, the first PPDU does not include the NDPA frame.

An operating frequency band of the first PPDU is a high frequency band, and the high frequency band is from 42.5 GHz to 71 GHz. The first PPDU is also referred to as a high-frequency PPDU. The first PPDU includes a first preamble and a data field. The first preamble includes at least one field. The field of the first preamble may be used to implement one or more of the following functions: channel estimation, synchronization, automatic gain control, signaling notification, correction, and the like.

For example, the first preamble includes at least a first field, a subcarrier spacing of the first field is A, A=X*B, and X is an integer greater than 1, for example, X=2, 3, or 4. B is a subcarrier spacing of a second field of a second preamble in a second PPDU. An operating frequency band of the second PPDU is a low frequency band, and the low frequency band is less than or equal to 7 GHz. The second PPDU is also referred to as a low-frequency PPDU. The second PPDU includes a second preamble. Optionally, the second PPDU further includes a data field. Therefore, in this embodiment of this application, the subcarrier spacing (namely, B) of the second field of the second preamble in the low-frequency PPDU (namely, the second PPDU) may be multiplied by a multiple X to obtain the subcarrier spacing (namely, A) of the first field of the first preamble in the high-frequency PPDU (namely, the first PPDU). For example, when B=312.5 kHz and X=4, A=1.25 MHz; and when B=78.125 kHz and X=16, A=1.25 MHz.

For example, the second field of the second preamble in the second PPDU may include at least one of an L-STF, an L-LTF, or an L-SIG field in FIG. 7 to FIG. 9, and the first field of the first preamble in the first PPDU may be a field defined in future communication that has a function of the L-STF, the L-LTF, or the L-SIG field.

For example, a subcarrier spacing of the data field of the first PPDU is (A/4)*Y, and Y is a positive number. For example, Y=0.5, 0.8, 1.5, 2, or the like. For example, a value of Y may be an integer greater than 1.

In this embodiment of this application, the values of Y may be for communication devices (namely, the first device and/or the second device) with different capabilities, and the values of Y may be different. For example, for a communication device with a strong anti-interference capability, the subcarrier spacing of the data field may be set to a small value, and therefore the value of Y is small. For a communication device with a weak anti-interference capability, the subcarrier spacing of the data field may be set to a large value, and therefore the value of Y is large.

It should be noted that the expression A/4 is used herein because in the conventional technology, a relationship between a subcarrier spacing of a data field of the low-frequency PPDU (for example, the second PPDU) and a subcarrier spacing of some fields of a preamble in the low-frequency PPDU in an HE standard and an EHT standard is 1:4. For example, in a 802.11ax standard, in each 20 MHz, a field such as an L-SIG field of the low-frequency PPDU corresponds to 64 points (that is, the subcarrier spacing is 312.5 kHz), and the data field of the low-frequency PPDU corresponds to 256 points (the subcarrier spacing is 78.125 kHz). Therefore, a relationship between the subcarrier spacing of the data field and the subcarrier spacing of the field such as the L-SIG field is 1:4. Therefore, in this embodiment of this application, this proportional relationship may also be adopted during design of the high-frequency PPDU. For example, when Y=1, the subcarrier spacing of the data field of the high-frequency PPDU (for example, the first PPDU) is A/4. However, a subcarrier spacing of some fields (for example, the first field of the first preamble) of the preamble in the high-frequency PPDU is A. Therefore, the 1:4 relationship also exists. Certainly, the 1:4 relationship herein is merely used as an implementation. When the value of Y is not 1, a relationship between the subcarrier spacing of the data field of the high frequency PPDU and the subcarrier spacing of some fields of the preamble in the high frequency PPDU is no longer the 1:4 relationship.

It should be noted that, although A/4 is given a specific physical meaning in the foregoing explanation, it is not necessarily limited to satisfy the foregoing 1:4 proportional relationship. This is because if a VHT standard is used as an example, a subcarrier spacing of a field of a preamble and a subcarrier spacing of a data field is in a 1:1 relationship, instead of a 4:1 relationship. It should be noted that an actual solution of the present invention is not affected because Y may be randomly set. The high-frequency PPDU supports a proportional relationship between a subcarrier spacing of a field of any preamble and a data field.

Step 1702: The second device performs a measurement based on the measurement configuration to obtain a channel measurement feedback result.

The measurement configuration indicates a subcarrier resolution for a measurement feedback, and the measurement configuration is related to X and/or Y.

For example, before or after step 1701, the first device further sends a third PPDU to the second device on the channel corresponding to the first bandwidth. The third PPDU is an NDP, that is, a PPDU that includes only a preamble and does not include a data field. The second device measures a training field of the third PPDU based on the measurement configuration to obtain the channel measurement feedback result. It may be understood that, to enable the second device to more accurately parse the first PPDU, the first device sends the third PPDU to the second device, and the second device measures the training field of the third PPDU based on the measurement configuration, and sends the channel measurement feedback result to the first device. The measurement configuration is related to X and/or Y corresponding to the first PPDU.

In an implementation method, when the data field of the first PPDU sent in step 1701 includes the NDPA frame, the NDPA frame may indicate the measurement configuration. Optionally, the NDPA frame in the data field of the first PPDU further directly or indirectly indicates X and/or Y. When the data field of the first PPPD sent in step 1701 does not include the NDPA frame, before step 1702, the first device may send a PPDU (for example, referred to as a fourth PPDU) including the NDPA frame to the second device. The NDPA frame indicates the measurement configuration. Optionally, the NDPA frame in the data field of the fourth PPDU further indicates X and/or Y.

Step 1703: The second device sends the channel measurement feedback result to the first device. Correspondingly, the first device receives the channel measurement feedback result.

In the solution, for an application scenario in which a high-frequency PPDU is designed by using a low-frequency PPDU, a method for performing the channel measurement feedback for the high-frequency PPDU is provided. In the method, the measurement configuration used to generate a channel measurement feedback result is related to X and/or Y. X indicates a relationship between a subcarrier spacing of a field of a preamble in the high-frequency PPDU and a subcarrier spacing of a field of a preamble in the low-frequency PPDU. Y indicates a relationship between the subcarrier spacing of the field of the preamble in the high-frequency PPDU and a subcarrier spacing of a data field of the high-frequency PPDU. The method can ensure that the channel measurement feedback is correctly performed, and therefore helps improve communication performance.

In an implementation method, when a channel bandwidth corresponding to the second PPDU is 20 MHz, a channel bandwidth (that is, the first bandwidth) corresponding to the first PPDU is 20*X MHz; when the channel bandwidth corresponding to the second PPDU is 40 MHz, the channel bandwidth (that is, the first bandwidth) corresponding to the first PPDU is 40*X MHz; when the channel bandwidth corresponding to the second PPDU is 80 MHz, the channel bandwidth (that is, the first bandwidth) corresponding to the first PPDU is 80*X MHz; when the channel bandwidth corresponding to the second PPDU is 160 MHz, the channel bandwidth (that is, the first bandwidth) corresponding to the first PPDU is 160*X MHz; and when the channel bandwidth corresponding to the second PPDU is 320 MHz, the channel bandwidth (that is, the first bandwidth) corresponding to the first PPDU is 320*X MHz.

In an implementation method, the measurement configuration may include a size of an RU or an MRU for the measurement feedback. The size of the RU or the MRU for the measurement feedback is a size of a largest RU or a largest MRU that does not exceed a first size divided by Y. The first size is a size of an RU corresponding to a second bandwidth in the low frequency band or a quantity of subcarriers corresponding to the low frequency band, and the second bandwidth is equal to the first bandwidth divided by X. When the second bandwidth is 20 MHz, the first size is 242 or 256 (242 is a size of an RU corresponding to 20 MHz, and 256 is a quantity of subcarriers corresponding to 20 MHz); when the second bandwidth is 40 MHz, the first size is 484 or 512 (484 is a size of an RU corresponding to 40 MHz, and 512 is a quantity of subcarriers corresponding to 40 MHz); when the second bandwidth is 80 MHz, the first size is 996 or 1024 (996 is a size of an RU corresponding to 80 MHz, and 1024 is a quantity of subcarriers corresponding to 80 MHz); when the second bandwidth is 160 MHz, the first size is 2*996 or 2048 (2*996 is a size of an RU corresponding to 160 MHz, and 2048 is a quantity of subcarriers corresponding to 160 MHz); and when the second bandwidth is 320 MHz, the first size is 4*996 or 4096 (where 4*996 is a size of an RU corresponding to 320 MHz, and 4096 is a quantity of subcarriers corresponding to 320 MHz).

It should be noted that the "size of the largest RU or the largest MRU" herein is included in a size of an RU or a size of an MRU defined in the conventional technology. For example, the second bandwidth=20 MHz, the first bandwidth=20*X MHz, and the first size=242 (that is, a 242-tone RU is indicated). It is assumed that Y=4. In this case, the size of the RU or the MRU for the measurement feedback is the size of the largest RU or the largest MRU that does not exceed 242/4, that is, a 52-tone RU. This is because in the conventional technology, there are RU forms such as a 26-tone RU, a 52-tone RU, a 106-tone RU, a 242-tone RU, and the like, and there are MRU forms such as a 52+26-tone MRU, a 106+26-tone MRU, a 484+242-tone MRU, a 996+484-tone MRU, a 2*996+484-tone MRU, a 3*996+484-tone MRU, a 3*996-tone MRU, 242+484+996-tone MRU, and the like. Because 242/4=60.5, the size of the largest RU or the largest MRU not exceeding 242/4 should be the 52-tone RU. It should be noted that the size of the largest RU or the largest MRU that does not exceed 242/4 is not a 60-tone RU because no 60-tone RU exists in the conventional technology.

In an implementation method, the data field of the first PPDU includes an NDPA frame, and a structure of the NDPA frame may be the same as that in FIG. 12, or may be obtained by modifying the structure of the NDPA frame in FIG. 12. The data field of the first PPDU includes at least one station information field. Each station information field includes a partial bandwidth information field, and the partial bandwidth information field indicates a bandwidth on which measurement feedback is to be performed. For example, when the first bandwidth corresponding to the first PPDU is less than or equal to 160*X MHz, a value of a most significant bit in the partial bandwidth information field is 0, and a measurement feedback resolution indicated by the NDPA frame of the data field of the first PPDU is 20*X MHz; or when the first bandwidth corresponding to the first PPDU is equal to 320*X MHz, the value of the most significant bit in the partial bandwidth information field is 1, and the measurement feedback resolution indicated by the NDPA frame of the data field of the first PPDU is 40*X MHz.

For example, based on a configuration of a partial bandwidth information field of an NDPA frame in the low-frequency PPDU shown in Table 6, a configuration of a partial bandwidth information field of an NDPA frame in the high-frequency PPDU (for example, the first PPDU) may be provided in this embodiment of this application.

The following Table 8 shows a configuration example of the partial bandwidth information field of the NDPA frame in the first PPDU. Specifically, Table 8 includes a relationship among the first bandwidth corresponding to the first PPDU, the size, corresponding to the first PPDU, of the RU or the MRU for the measurement feedback, the partial bandwidth information field of the NDPA frame in the first PPDU, and an operating bandwidth of the foregoing second device (that is, a receive device).

**Table 8**

| Size of the RU or the MRU for the measurement feedback | First bandwidth (MHz) | Binary format of the partial bandwidth information field | Operating bandwidth of the second device |
|---|---|---|---|
| Size of the largest RU not exceeding 242/Y | 20*X | 010000000 | (20, 40, 80, 160, 320)*X |
| | 40*X | 010000000, 001000000 | |
| | 80*X | 010000000, 001000000, 000100000, 000010000 | (20, 80, 160, 320)*X |
| | 160*X | 010000000, 001000000, 000100000, 000010000, 000001000, 000000100, 000000010, 000000001 | |
| Size of the largest RU not exceeding 484/Y | 40*X | 011000000 | (40, 80, 160, 320)*X |
| | 80*X | 011000000, 000110000 | (80, 160, 320)*X |
| | 160*X | 011000000, 000110000, 000001100, 000000011 | |
| | 320*X | 110000000, 101000000, 100100000, 100010000, 100001000, 100000100, 100000010, 100000001 | |
| Size of the largest | 80*X | 011100000, 011010000, 010110000, 001110000 | |
| MRU not exceeding (484+242)/Y | 160*X | 011100000, 011010000, 010110000, 001110000, 000001110, 000001101, 000001011, 000000111 | |
| Size of the largest RU not exceeding 996/Y | 80*X | 011110000 | |
| | 160*X | 011110000, 000001111 | |
| | 320*X | 111000000, 100110000, 100001100, 100000011 | |
| Size of the largest MRU not exceeding (996+484)/Y | 160*X | 011111100, 011110011, 011001111, 000111111 | (160, 320)*X |
| | 320*X | 111100000, 111010000, 110110000, 101110000, 100001110, 100001101, 100001011, 100000111 | |
| Size of the largest MRU not exceeding (996+484+242)/Y | 160*X | 011101111, 011011111, 010111111, 001111111, 011111110, 011111101, 011111011, 011110111 | |
| Size of the largest RU not exceeding 2*996/Y | 160*X | 011111111 | |
| | 320*X | 111110000, 100001111 | |
| Size of the largest MRU not exceeding (2*996+484)/Y | 320*X | 111111000, 111110100, 111101100, 111011100, 110111100, 101111100, 100111110, 100111101, 100111011, 100110111, 100101111, 100011111 | 320*X |
| Size of the largest MRU not exceeding 3*996/Y | 320*X | 111111100, 111110011, 111001111, 100111111 | |
| Size of the largest MRU not exceeding (3*996+484)/Y | 320*X | 111111110, 111111101, 111111011, 111110111, 111101111, 111011111, 110111111, 101111111 | |
| Size of the largest RU not exceeding 4*996/Y | 320*X | 111111111 | |

It may be learned that Table 8 is obtained based on Table 6. Specifically, a value for a 1^{st} column in Table 8 is the size of the largest RU or the largest MRU that does not exceed a value in a 1^{st} column in Table 6 divided by Y; a value in a 2^{nd} column in Table 8 is obtained by multiplying a value in a 2^{nd} column in Table 6 by X; a value in a 3^{rd} column in Table 8 is the same as a value in a 3^{rd} column in Table 6; and a value in a 4^{th} column in Table 8 is obtained by multiplying a value in a 4^{th} column in Table 6 by X. X and Y herein are X and Y described in step 1701.

It should be noted that, in Table 8, in the case of some values of Y, some rows may be deleted because the size of the RU or the MRU is improper. For example, when the value of Y is 4, (484+242)/4=181.5. In this case, the MRU 106+26 may be selected, or the entry may be deleted because a difference between 106 and 26 is too large. In addition, although some entries in Table 8 use the description "size of the largest RU not exceeding...", and some other entries use the description "size of the largest MRU not exceeding...", Table 8 is merely an example, and the descriptions may be replaced with each other or combined during actual application, that is, a description "size of the largest RU or MRU not exceeding...".

The following provides some specific examples of Table 8. In the following examples, X=4 is used as an example, and Y=4, 2, or 0.5 is used as an example.

Example 1: If X=4, and Y=4, the configuration of the partial bandwidth information field of the NDPA frame in the first PPDU may be shown in Table 8-1.

**Table 8-1**

| Size of the RU or the MRU for the measurement feedback | First bandwidth (MHz) | Binary format of the partial bandwidth information field | Operating bandwidth of the second device |
|---|---|---|---|
| 52 | 80 | 010000000 | 80, 160, 320, 640, 1280 |
| | 160 | 010000000, 001000000 | |
| | 320 | 010000000, 001000000, 000100000, 000010000 | 80, 320, 640, 1280 |
| | 640 | 010000000, 001000000, 000100000, 000010000, 000001000, 000000100, 000000010, 000000001 | |
| 106 | 160 | 011000000 | 160, 320, 640, 1280 |
| | 320 | 011000000, 000110000 | 320, 640, 1280 |
| | 640 | 011000000, 000110000, 000001100, 000000011 | |
| | 1280 | 110000000, 101000000, 100100000, 100010000, 100001000, 100000100, 100000010, 100000001 | |
| 242 | 320 | 011110000 | |
| | 640 | 011110000, 000001111 | |
| | 1280 | 111000000, 100110000, 100001100, 100000011 | |
| 484 | 640 | 011111111 | 640, 1280 |
| | 1280 | 111110000, 100001111 | |
| 996 | 1280 | 111111111 | 1280 |

Example 2: If X=4, and Y=2, the configuration of the partial bandwidth information field of the NDPA frame in the first PPDU may be shown in Table 8-2.

**Table 8-2**

| Size of the RU or the MRU for the measurement feedback | First bandwidth (MHz) | Binary format of the partial bandwidth information field | Operating bandwidth of the second device |
|---|---|---|---|
| 106 | 80 | 010000000 | 80, 160, 320, 640, 1280 |
| | 160 | 010000000, 001000000 | |
| | 320 | 010000000, 001000000, 000100000, 000010000 | 80, 320, 640, 1280 |
| | 640 | 010000000, 001000000, 000100000, 000010000, 000001000, 000000100, 000000010, 000000001 | |
| 242 | 160 | 011000000 | 160, 320, 640, 1280 |
| | 320 | 011000000, 000110000 | 320, 640, 1280 |
| | 640 | 011000000, 000110000, 000001100, 000000011 | |
| | 1280 | 110000000, 101000000, 100100000, 100010000, 100001000, 100000100, 100000010, 100000001 | |
| 484 | 320 | 011110000 | |
| | 640 | 011110000, 000001111 | |
| | 1280 | 111000000, 100110000, 100001100, 100000011 | |
| 484+242 | 640 | 011111100, 011110011, 011001111, 000111111 | 640, 1280 |
| | 1280 | 111100000, 111010000, 110110000, 101110000, 100001110, 100001101, 100001011, 100000111 | |
| 996 | 640 | 011111111 | |
| | 1280 | 111110000, 100001111 | |
| 996+484 | 1280 | 111111100, 111110011, 111001111, 100111111 | 1280 |
| 2*996 | 1280 | 111111111 | |

Example 3: If X=4, and Y=0.5, the configuration of the partial bandwidth information field of the NDPA frame in the first PPDU may be shown in Table 8-3.

**Table 8-3**

| Size of the RU or the MRU for the measurement feedback | First bandwidth (MHz) | Binary format of the partial bandwidth information field | Operating bandwidth of the second device |
|---|---|---|---|
| 484 | 80 | 010000000 | 80, 160, 320, 640, 1280 |
| | 160 | 010000000, 001000000 | |
| | 320 | 010000000, 001000000, 000100000, 000010000 | 80, 320, 640, 1280 |
| | 640 | 010000000, 001000000, 000100000, 000010000, 000001000, 000000100, 000000010, 000000001 | |
| 996 | 160 | 011000000 | 160, 320, 640, 1280 |
| | 320 | 011000000, 000110000 | 320, 640, 1280 |
| | 640 | 011000000, 000110000, 000001100, 000000011 | |
| | 1280 | 110000000, 101000000, 100100000, 100010000, 100001000, 100000100, 100000010, 100000001 | |
| 996+484 | 320 | 011100000, 011010000, 010110000, 001110000 | |
| | 640 | 011100000, 011010000, 010110000, 001110000, 000001110, 000001101, 000001011, 000000111 | |
| 2*996 | 320 | 011110000 | |
| | 640 | 011110000, 000001111 | |
| | 1280 | 111000000, 100110000, 100001100, 100000011 | |
| 3*996 | 640 | 011111100, 011110011, 011001111, 000111111 | 640, 1280 |
| | 1280 | 111100000, 111010000, 110110000, 101110000, 100001110, 100001101, 100001011, 100000111 | |
| 3*996+484 | 640 | 011101111, 011011111, 010111111, 001111111, 011111110, 011111101, 011111011, 011110111 | |
| 4*996 | 640 | 011111111 | |
| | 1280 | 111110000, 100001111 | |

The size of the RU or the MRU for the measurement feedback in the 1^{st} column in Table 8 is a size of the largest RU or the largest MRU that does not exceed the first size divided by Y, and the first size is a size of an RU corresponding to the second bandwidth in the low frequency band.

In another implementation method, the size of the RU or the MRU for the measurement feedback in the 1^{st} column may alternatively be defined as the size of the largest RU or the largest MRU that does not exceed the first size divided by Y, and the first size is a quantity of subcarriers corresponding to the second bandwidth in the low frequency band. Correspondingly, "size of the largest RU not exceeding 242/Y" in Table 8 is replaced with "size of the largest RU not exceeding 256/Y"; "size of the largest RU not exceeding 484/Y" in Table 8 is replaced with "size of the largest RU not exceeding 512/Y"; "size of the largest MRU not exceeding (484+242)/Y" in Table 8 is replaced with "size of the largest MRU not exceeding (512+256)/Y"; "size of the largest RU not exceeding 996/Y" in Table 8 is replaced with "size of the largest RU not exceeding 1024/Y"; "size of the largest MRU not exceeding (996+484)/Y" in Table 8 is replaced with "size of the largest MRU not exceeding (1024+512)/Y"; "size of the largest MRU not exceeding (996+484+242)/Y" in Table 8 is replaced with "size of the largest MRU not exceeding (1024+512+256)/ Y"; "size of the largest RU not exceeding 2*996/Y" in Table 8 is replaced with "size of the largest RU not exceeding 2*1024/Y"; "size of the largest MRU not exceeding (2*996+484)/Y" in Table 8 is replaced with "size of the largest MRU not exceeding (2*1024+512)/Y"; "size of the largest MRU not exceeding 3*996/Y" in Table 8 is replaced with "size of the largest MRU not exceeding 3*1024/Y"; "size of the largest MRU not exceeding (3*996+484)/Y" in Table 8 is replaced with "size of the largest MRU not exceeding (3*1024+512)/Y"; and "size of the largest RU not exceeding 4*996/Y" in Table 8 is replaced with "size of the largest RU not exceeding 4*1024/Y".

In another implementation method, "size of the RU or the MRU for the measurement feedback" in the 1^{st} column of Table 8 may be replaced with "subcarrier range for the measurement feedback". Correspondingly, "size of the largest RU not exceeding 242/Y" in Table 8 is replaced with "256/Y"; "size of the largest RU not exceeding 484/Y" in Table 8 is replaced with "512/Y"; "size of the largest MRU not exceeding (484+242)/Y" in Table 8 is replaced with "(512+256)/Y"; "size of the largest RU not exceeding 996/Y" in Table 8 is replaced with "1024/Y"; "size of the largest MRU not exceeding (996+484)/Y" in Table 8 is replaced with "(1024+512)/Y"; "size of the largest MRU not exceeding (996+484+242)/Y" in Table 8 is replaced with "(1024+512+256)/ Y"; "size of the largest RU not exceeding 2*996/Y" in Table 8 is replaced with "2*1024/Y"; "size of the largest MRU not exceeding (2*996+484)/Y" in Table 8 is replaced with "(2*1024+512)/Y"; "size of the largest MRU not exceeding 3*996/Y" in Table 8 is replaced with "3*1024/Y"; "size of the largest MRU not exceeding (3*996+484)/Y" in Table 8 is replaced with "(3*1024+512)/Y"; and "size of the largest RU not exceeding 4*996/Y" in Table 8 is replaced with "4*1024/Y".

In another implementation method, the high-frequency PPDU may also be transmitted in a non-OFDMA format. Therefore, an OFDMA-based partial feedback may not be required, but a full bandwidth feedback is used. The full bandwidth feedback means that the measurement feedback needs to be performed on all bandwidths, instead of performing the measurement feedback is performed on a specified bandwidth part.

It should be noted that the high frequency may support the full bandwidth feedback, or a full bandwidth feedback with only punctured channels excluded. As the name implies, the full bandwidth feedback may be performed by using an entire bandwidth as a feedback range, and a full bandwidth feedback with the punctured channels excluded is performing a feedback by using the entire bandwidth as a feedback range, but a range corresponding to the punctured channels does not need to be fed back.

Based on the implementation method, a relationship between the first bandwidth corresponding to the first PPDU and the size of the RU for the measurement feedback may be shown in Table 9.

**Table 9**

| First bandwidth (MHz) | Size of the RU for the measurement feedback |
|---|---|
| 20*X | Size of the largest RU not exceeding 242/Y |
| 40*X | Size of the largest RU not exceeding 484/Y |
| 80*X | Size of the largest RU not exceeding 996/Y |
| 160*X | Size of the largest RU not exceeding 2*996/Y |
| 320*X | Size of the largest RU not exceeding 4*996/Y |

For example, when Y=1, Table 9 may be simplified to the following Table 9-1.

**Table 9-1**

| First bandwidth (MHz) | Size of the RU for the measurement feedback (Y=1) |
|---|---|
| 20*X | 242 |
| 40*X | 484 |
| 80*X | 996 |
| 160*X | 2*996 |
| 320*X | 4*996 |

For example, when Y=4, Table 9 may be simplified to the following Table 9-2.

**Table 9-2**

| First bandwidth (MHz) | Size of the RU for the measurement feedback (Y=4) |
|---|---|
| 20*X | 52 |
| 40*X | 106 |
| 80*X | 242 |
| 160*X | 484 |
| 320*X | 996 |

For the full bandwidth feedback manner, in an implementation method, the data field of the first PPDU includes an NDPA frame. The NDPA frame does not include a partial bandwidth information field that indicates a bandwidth on which the measurement feedback is to be performed. That is, when the NDPA frame does not include the partial bandwidth information field that indicates the bandwidth on which measurement feedback is to be performed, the full bandwidth feedback manner is used by default.

For the full bandwidth feedback manner, in another implementation method, the data field of the first PPDU includes an NDPA frame. The NDPA frame includes a partial bandwidth information field that indicates to perform the measurement feedback within a full bandwidth range. To distinguish from a partial bandwidth feedback manner, information of the partial bandwidth information field may be set to a corresponding maximum range. For example, if the partial bandwidth information field is based on an EHT format, that is, includes the nine bits shown in FIG. 16, when the first bandwidth corresponding to the first PPDU is less than or equal to 160*X MHz, the partial bandwidth information field is set to 011111111, that is, B0=0, and B1 to B8 are all 1. When the first bandwidth corresponding to the first PPDU is equal to 320*X MHz, the partial bandwidth information field is set to 111111111, that is, B0=1, and B1 to B8 are all 1. For another example, if the partial bandwidth information field is based on an HE format, that is, include the 14 bits shown in FIG. 14, a similar operation may also be performed. For example, the RU start index is set to 0, and the RU end index is set to an index of a largest 26-tone RU that corresponds to the second bandwidth. The second bandwidth is equal to the first bandwidth divided by X.

For the full bandwidth feedback manner, in another implementation method, the measurement feedback may alternatively be performed on a channel other than a punctured channel within a full bandwidth range. The punctured channel is a channel on which the measurement feedback is not to be performed. The second device may determine, based on puncturing information, a full bandwidth feedback range with the punctured channel excluded. An indication manner of the puncturing information is not limited in the present invention, which may be indicated by the partial bandwidth information field, or may be indicated by an independent puncturing information field. The partial bandwidth information field in the NDPA frame in the first PPDU may indicate to perform the measurement feedback on the channel other than the punctured channel within a full bandwidth range. The size of the RU or the MRU for the measurement feedback may correspond to an available channel in the full bandwidth. For example, the size of the RU or the MRU for the measurement feedback corresponds to a part of values of the binary format of the partial bandwidth information field.

For example, the NDPA frame of the first PPDU includes a partial bandwidth information field and a puncturing information field. The partial bandwidth information field indicates that the measurement feedback is performed on the channel other than the punctured channel within the full bandwidth range. The puncturing information field indicates a range or location of the punctured channel. The puncturing information field may be a bitmap or an index table. The index table method is used as an example, and a value may correspond to a feedback mode. In another manner, a specific bandwidth may have a specific index table. The partial bandwidth information field and the puncturing information field are combined, to indicate that the measurement feedback is performed on the channel other than the punctured channel within the full bandwidth range, and a specific puncturing location or range is indicated by the puncturing information field. It should be noted that, if the NDPA frame does not include the partial bandwidth information field, it is indicated by default that the measurement feedback is performed within the full bandwidth range, or it is indicated by default that the measurement feedback is performed on the channel other than the punctured channel within the full bandwidth range. Then, based on the puncturing location or range indicated by the puncturing information field, it may be determined that the measurement feedback is performed on the channel other than the punctured channel in the full bandwidth range, and the puncturing information field indicates a specific puncturing location or range.

For example, if the NDPA frame does not include the puncturing information field, the partial bandwidth information field may indicate to perform the measurement feedback on the channel other than the punctured channel within the full bandwidth range, and the partial bandwidth information field further indicates the specific puncturing information range or location. The size of the RU or the MRU for the measurement feedback corresponds to a part of values of the binary format of the partial bandwidth information field shown in Table 8. For example, when the first bandwidth is equal to 160*X MHz, a value of the partial bandwidth information field is 011110011, indicating a full bandwidth feedback in a channel puncturing manner. A value of a high-order bit B0 is 0, indicating that the feedback resolution is 20*X MHz. Values of bits B1 to B8 are sequentially 1, 1, 1, 1, 0, 0, 1, and 1, where 1 indicates that the feedback needs to be performed on a corresponding 20*X MHz channel, and 0 indicates that the feedback does not need to be performed on the corresponding 20*X MHz channel. Because there are six 1s and two 0s, it indicates that measurement feedback needs to be performed on a 120*X MHz channel. In addition, a corresponding size of the MRU is a size of the largest MRU that does not exceed (996+484)/Y.

In an implementation method, in this embodiment of this application, a plurality of candidate sets may be defined. Each candidate set includes at least one candidate subcarrier resolution. The subcarrier resolution may be represented by a size of Ng. For a meaning of Ng, refer to the foregoing descriptions. Therefore, the plurality of candidate sets may also be referred to as a plurality of Ng candidate sets or Ng sets. Each candidate set corresponds to one value of X and/or Y. For example, when the value of X is x1, and/or the value of Y is y1, the value corresponds to a candidate set 1, and the candidate set 1 is {a1, b1, c1, ...}. When the value of X is x2, and/or the value of Y is y2, the value corresponds to a candidate set 2, and the candidate set 2 is {a2, b2, c2, ...}. Usually, a small value of Ng may tend to be selected for a larger value of X and/or Y, and a large value of Ng may tend to be selected for a smaller value of X and/or Y. Quantities of elements in different candidate sets may be the same or different.

For example, when the first PPDU in the embodiment in FIG. 17 corresponds to a specific value of X and/or Y, a candidate set corresponding to the value of X and/or Y in the plurality of candidate sets may be determined, for example, corresponding to a first candidate set, to select a specific subcarrier resolution (that is, the size of Ng) from the first candidate set.

For example, there may be a multiple relationship between elements in different candidate sets. For example, the plurality of candidate sets include a second candidate set and a third candidate set. A part or all of candidate subcarrier resolutions in the second candidate set have a multiple relationship with a part or all of candidate subcarrier resolutions in the third candidate set. For example, when the value of Y is 1, the value corresponds to the second candidate set {4, 8, 16}, and when the value of Y is 4, the value corresponds to the third candidate set {1, 2, 4}. For example, when the value of Y is 1, the value corresponds to the second candidate set {4, 16}, and when the value of Y is 4, the value corresponds to the third candidate set {1, 2, 4}.

For example, different candidate sets may be indicated in a manner shown in Table 10 below.

**Table 10**

| Bit value | Candidate set 1 | Candidate set 2 |
|---|---|---|
| 00 | 4 | 1 |
| 01 | 8 | 2 |
| 10 | 16 | 4 |
| 11 | Reserved | Reserved |

In another implementation method, a value range of Ng may be added based on the size of Ng defined in Table 7. For example, Table 7 is modified to obtain content shown in Table 11, which is jointly indicated by a feedback type and Ng field (that is, a bit 25 and a bit 26) and a codebook size field (that is, a bit 28) in the NDPA frame in the trigger-based sounding.

**Table 11**

| Feedback Type and Ng | | Codebook size | Description (When Y=1, the former is selected for Ng; and when Y=4, the latter is selected for Ng.) |
|---|---|---|---|
| B25 | B26 | B28 | |
| 0 | 0 | 0 | SU, *Ng*=4 or 1, quantizationresolution (φ, ψ)={4, 2} |
| 0 | 0 | 1 | SU, *Ng*=4 or 1, quantizationresolution (φ, ψ)={6, 4} |
| 0 | 1 | 0 | SU, *Ng*=16 or 4, quantizationresolution (φ, ψ)={4, 2} |
| 0 | 1 | 1 | SU, *Ng*=16 or 4, quantizationresolution (φ, ψ)={6, 4} |
| 1 | 0 | 0 | MU, *Ng*=4 or 1, quantizationresolution (φ, ψ)={7, 5} |
| 1 | 0 | 1 | MU, *Ng*=4 or 1, quantizationresolution (φ, ψ)={9, 7} |
| 1 | 1 | 0 | CQI |
| 1 | 1 | 1 | MU, *Ng*=16 or 4, quantizationresolution (φ, ψ)={9, 7} |

In another implementation method, in this embodiment of this application, only one candidate set (for example, which is referred to as a fourth candidate set) may be defined, and the candidate set includes a plurality of candidate subcarrier resolutions. The subcarrier resolution may be represented by a size of Ng. For a meaning of Ng, refer to the foregoing descriptions. Each value of X and/or Y may correspond to a part or all of candidate subcarrier resolutions in the candidate set. For example, the candidate set is {1, 2, 4, 8, 16}. When the value of X is x1, and/or the value of Y is y1, the value corresponds to 1, 2, and 4 in the candidate set. When the value of X is x2, and/or the value of Y is y2, the value corresponds to 4, 8, and 16 in the candidate set. For another example, the candidate set is {1, 2, 4, 8, 16}. Regardless of values of X and Y, the values correspond to 1, 2, 4, 8, and 16, that is, a value may be selected from 1, 2, 4, 8, and 16 as a value of Ng.

It should be noted that, in this embodiment of this application, although a correspondence between various types of information is displayed in a table form, during actual application, it is not limited to use only the table form, and another display form may alternatively be used. In addition, a correspondence between a plurality of types of information in any one of the foregoing tables may be split into a plurality of tables, and the plurality of split tables jointly indicate an association relationship between the plurality of types of information. It may be understood that, to implement the functions in the foregoing embodiments, the first device or the second device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

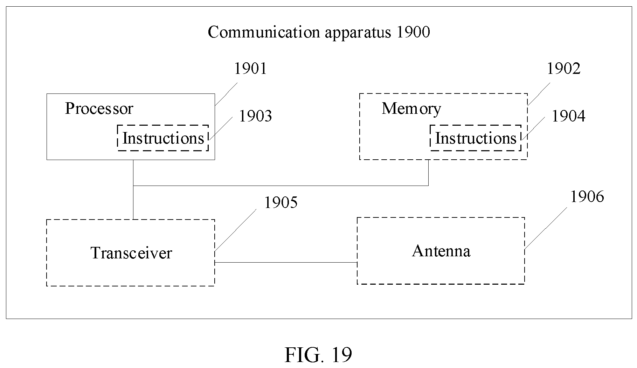

FIG. 18 and FIG. 19 are diagrams of possible structures of communication apparatuses according to embodiments of this application. The communication apparatuses may be configured to implement functions of the first device or the second device in the foregoing method embodiments, and therefore can also implement beneficial effects of the foregoing method embodiment. In this embodiment of this application, the communication apparatus may be a first device or a second device, or may be a module (for example, a chip) used in the first device or the second device.

A communication apparatus 1800 shown in FIG. 18 includes a processing unit 1810 and a transceiver unit 1820. The communication apparatus 1800 is configured to implement functions of the first device or the second device in the foregoing method embodiment.

When the communication apparatus 1800 is configured to implement the functions of the first device in the foregoing method embodiment, the processing unit 1810 is configured to control the transceiver unit 1820 to send a first physical layer protocol data unit (physical layer protocol data unit, PPDU) to the second device on a channel corresponding to a first bandwidth, where the first PPDU includes a first field of a first preamble and a data field, a subcarrier spacing of the first field is A, A=X*B, X is an integer greater than 1, B is a subcarrier spacing of a second field of a second preamble in a second PPDU, a subcarrier spacing of the data field is (A/4)*Y, and Y is a positive number; and receive a channel measurement feedback result from the second device, where the channel measurement feedback result is obtained by performing a measurement based on a measurement configuration, the measurement configuration indicates a subcarrier resolution for a measurement feedback, and the measurement configuration is related to X and/or Y.

When the communication apparatus 1800 is configured to implement the functions of the second device in the foregoing method embodiment, the transceiver unit 1820 is configured to receive a first PPDU from the first device on a channel corresponding to a first bandwidth, where the first PPDU includes a first field of a first preamble and a data field, a subcarrier spacing of the first field is A, A=X*B, X is an integer greater than 1, B is a subcarrier spacing of a second field of a second preamble in a second PPDU a subcarrier spacing of the data field is (A/4)*Y, and Y is a positive number; the processing unit 1810 is configured to perform a measurement based on a measurement configuration to obtain a channel measurement feedback result, where the measurement configuration indicates a subcarrier resolution for a measurement feedback, and the measurement configuration is related to X and/or Y; and the transceiver unit 1820 is further configured to send the channel measurement feedback result to the first device.

When the communication apparatus 1800 is configured to implement the functions of the first device and/or the second device in the foregoing method embodiment, the communication apparatus 1800 may further perform any one or more of the following methods.

In a possible implementation method, an operating frequency band of the first PPDU is a high frequency band, and the high frequency band is from 42.5 GHz to 71 GHz; and an operating frequency band of the second PPDU is a low frequency band, and the low frequency band is less than or equal to 7 GHz.

In a possible implementation method, the first bandwidth is 20*X MHz, 40*X MHz, 80*X MHz, 160*X MHz, or 320*X MHz.

In a possible implementation method, the measurement configuration may include a size of an RU or an MRU for the measurement feedback. The size of the RU or the MRU for the measurement feedback is a size of a largest RU or a largest MRU that does not exceed a first size divided by Y. The first size is a size of an RU corresponding to a second bandwidth in the low frequency band or a quantity of subcarriers corresponding to the low frequency band, and the second bandwidth is equal to the first bandwidth divided by X.

In a possible implementation method, the data field includes an NDPA frame. The NDPA frame includes a partial bandwidth information field, and the partial bandwidth information field indicates a bandwidth on which the measurement feedback is to be performed. When the first bandwidth is less than or equal to 160*X MHz, a value of a most significant bit in the partial bandwidth information field is 0, and a measurement feedback resolution indicated by the NDPA frame is 20*X MHz; or when the first bandwidth is equal to 320*X MHz, the value of the most significant bit in the partial bandwidth information field is 1, and the measurement feedback resolution indicated by the NDPA frame is 40*X MHz.

In a possible implementation method, a relationship among the first bandwidth, the size of the RU or the MRU for the measurement feedback, the partial bandwidth information field, and an operating bandwidth of the second device is as follows.

| Size of the RU or the MRU for the measurement feedback | First bandwidth (MHz) | Binary format of the partial bandwidth information field | Operating bandwidth of the second device |
|---|---|---|---|
| Size of the largest RU not exceeding 242/Y | 20*X | 010000000 | (20, 40, 80, 160, 320)*X |
| | 40*X | 010000000, 001000000 | |
| | 80*X | 010000000, 001000000, 000100000, 000010000 | (20, 80, 160, 320)*X |
| | 160*X | 010000000, 001000000, 000100000, 000010000, 000001000, 000000100, 000000010, 000000001 | |
| Size of the largest RU not exceeding 484/Y | 40*X | 011000000 | (40, 80, 160, 320)*X |
| | 80*X | 011000000, 000110000 | (80, 160, 320)*X |
| | 160*X | 011000000, 000110000, 000001100, 000000011 | |
| | 320*X | 110000000, 101000000, 100100000, 100010000, 100001000, 100000100, 100000010, 100000001 | |
| Size of the largest MRU not exceeding (484+242)/Y | 80*X | 011100000, 011010000, 010110000, 001110000 | |
| | 160*X | 011100000, 011010000, 010110000, 001110000, 000001110, 000001101, 000001011, 000000111 | |
| Size of the largest | 80*X | 011110000 | |
| RU not exceeding 996/Y | 160*X | 011110000, 000001111 | |
| | 320*X | 111000000, 100110000, 100001100, 100000011 | |
| Size of the largest MRU not exceeding (996+484)/Y | 160*X | 011111100, 011110011, 011001111, 000111111 | (160, 320)*X |
| | 320*X | 111100000, 111010000, 110110000, 101110000, 100001110, 100001101, 100001011, 100000111 | |
| Size of the largest MRU not exceeding (996+484+242)/Y | 160*X | 011101111, 011011111, 010111111, 001111111, 011111110, 011111101, 011111011, 011110111 | |
| Size of the largest RU not exceeding 2*996/Y | 160*X | 011111111 | |
| | 320*X | 111110000, 100001111 | |
| Size of the largest MRU not exceeding (2*996+484)/Y | 320*X | 111111000, 111110100, 111101100, 111011100, 110111100, 101111100, 100111110, 100111101, 100111011, 100110111, 100101111, 100011111 | 320*X |
| Size of the largest MRU not exceeding 3*996/Y | 320*X | 111111100, 111110011, 111001111, 100111111 | |
| Size of the largest MRU not exceeding (3*996+484)/Y | 320*X | 111111110, 111111101, 111111011, 111110111, 111101111, 111011111, 110111111, 101111111 | |
| Size of the largest RU not exceeding 4*996/Y | 320*X | 111111111 | |

In a possible implementation method, the partial bandwidth information field indicates to perform the measurement feedback on a channel other than a punctured channel within a full bandwidth range. The punctured channel is a channel on which the measurement feedback is not to be performed. The size of the RU or the MRU for the measurement feedback corresponds to a part of values of the binary format of the partial bandwidth information field.

In a possible implementation method, a relationship between the first bandwidth and the size of the RU for the measurement feedback is as follows.

| First bandwidth (MHz) | Size of the RU for the measurement feedback |
|---|---|
| 20*X | Size of the largest RU not exceeding 242/Y |
| 40*X | Size of the largest RU not exceeding 484/Y |
| 80*X | Size of the largest RU not exceeding 996/Y |
| 160*X | Size of the largest RU not exceeding 2*996/Y |
| 320*X | Size of the largest RU not exceeding 4*996/Y |

In a possible implementation method:

| First bandwidth (MHz) | Size of the RU for the measurement feedback (Y=1) | Size of the RU for the measurement feedback (Y=4) |
|---|---|---|
| 20*X | 242 | 52 |
| 40*X | 484 | 106 |
| 80*X | 996 | 242 |
| 160*X | 2*996 | 484 |
| 320*X | 4*996 | 996 |

In a possible implementation method, the data field includes an NDPA frame. The NDPA frame does not include a partial bandwidth information field, and the partial bandwidth information field indicates a bandwidth on which the measurement feedback is to be performed.

In a possible implementation method, the data field includes an NDPA frame. The NDPA frame includes a partial bandwidth information field, and the partial bandwidth information field indicates to perform the measurement feedback within a full bandwidth range.

In a possible implementation method, the NDPA frame indicates X and/or Y.

In a possible implementation method, the NDPA frame indicates the measurement configuration.

In a possible implementation method, the subcarrier resolution is included in a first candidate set. The first candidate set is a candidate set, among a plurality of candidate sets, that corresponds to X and/or Y, and each of the plurality of candidate sets includes at least one candidate subcarrier resolution.

In a possible implementation method, the plurality of candidate sets include a second candidate set and a third candidate set. A part or all of candidate subcarrier resolutions in the second candidate set have a multiple relationship with a part or all of candidate subcarrier resolutions in the third candidate set.

In a possible implementation method, the subcarrier resolution is one of a part of candidate subcarrier resolutions in a fourth candidate set, and the part of candidate subcarrier resolutions correspond to X and/or Y.

For more detailed descriptions of the processing unit 1810 and the transceiver unit 1820, directly refer to related descriptions of the method embodiment. Details are not described herein again.

FIG. 19 is a diagram of a structure of a communication apparatus according to an embodiment of this application. The communication apparatus 1900 includes a processor 1901, and optionally further includes at least one of a memory 1902, a transceiver 1905, and an antenna 1906.

The transceiver 1905 may be a transceiver unit, a transceiver device, a transceiver circuit, or the like, and is configured to implement a transceiver function. The transceiver 1905 may include a receiver and a transmitter. The receiver may be a receiving device, a receiver circuit, or the like, and is configured to implement a receiving function. The transmitter may be a transmitting device, a transmitter circuit, or the like, and is configured to implement a sending function.

The memory 1902 may store a computer program (computer program), software code, or instructions 1904. The computer program, software code, or instructions 1904 may also be referred to as firmware. The processor 1901 may control the communication apparatus 1900 by running a computer program, software code, or instructions 1903 of the processor 1901, or by invoking the computer program, software code, or instructions 1904 stored in the memory 1902, to implement the following embodiments of this application. The processor 1901 may be a central processing unit (central processing unit, CPU), and the memory 1902 may be a read-only memory (read-only memory, ROM) or a random access memory (random access memory, RAM).

The processor 1901 and the transceiver 1905 described in this application may be disposed on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), or an electronic device.

The modules included in the communication apparatus 1900 are merely examples for description. This is not limited in this application.

When the communication apparatus 1900 is configured to implement the foregoing method embodiment, the processor 1901 may implement the functions of the processing unit 1810, and the transceiver 1905 may implement the functions of the transceiver unit 1820.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. The computer program is a set of instructions that instruct each step of an action of an electronic computer or another device having a message processing capability, and is usually written in a program design language and run on a target architecture. When the computer programs or the instructions are loaded and executed on a computer, all or a part of the procedures or the functions in embodiments of this application are performed. The computer may be a general-purpose computer, a dedicated computer, a computer network, or another programmable apparatus. The computer programs or the instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects, and represents that three relationships may exist. For example, A and/or B may indicate the following three cases: Only A exists, both A and B exist, and only B exists, where A and B may be in a singular form or a plural form. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first device or a module of the first device, wherein the method comprises:
sending a first physical layer protocol data unit PPDU to a second device on a channel corresponding to a first bandwidth, wherein the first PPDU comprises a first field of a first preamble and a data field, a subcarrier spacing of the first field is A, A=X*B, X is an integer greater than 1, B is a subcarrier spacing of a second field of a second preamble in a second PPDU, a subcarrier spacing of the data field is (A/4)*Y, and Y is a positive number; and
receiving a channel measurement feedback result from the second device, wherein the channel measurement feedback result is obtained by performing a measurement based on a measurement configuration, the measurement configuration indicates a subcarrier resolution for a measurement feedback, and the measurement configuration is related to X and/or Y.

2. A communication method, applied to a second device or a module of the second device, wherein the method comprises:
receiving a first PPDU from a first device on a channel corresponding to a first bandwidth, wherein the first PPDU comprises a first field of a first preamble and a data field, a subcarrier spacing of the first field is A, A=X*B, X is an integer greater than 1, B is a subcarrier spacing of a second field of a second preamble in a second PPDU, a subcarrier spacing of the data field is (A/4)*Y, and Y is a positive number;
performing a measurement based on a measurement configuration to obtain a channel measurement feedback result, wherein the measurement configuration indicates a subcarrier resolution for a measurement feedback, and the measurement configuration is related to X and/or Y; and
sending the channel measurement feedback result to the first device.

3. The method according to claim 1 or 2, wherein
an operating frequency band of the first PPDU is a high frequency band, and the high frequency band is from 42.5 GHz to 71 GHz; and
an operating frequency band of the second PPDU is a low frequency band, and the low frequency band is less than or equal to 7 GHz.

4. The method according to any one of claims 1 to 3, wherein the first bandwidth is 20*X MHz, 40*X MHz, 80*X MHz, 160*X MHz, or 320*X MHz.

5. The method according to any one of claims 1 to 4, wherein the measurement configuration comprises a size of a resource unit RU or a multi-resource unit MRU for the measurement feedback, the size of the RU or the MRU for the measurement feedback is a size of a largest RU or a largest MRU that does not exceed a first size divided by Y, the first size is a size of an RU corresponding to a second bandwidth in the low frequency band or a quantity of subcarriers corresponding to the low frequency band, and the second bandwidth is equal to the first bandwidth divided by X.

6. The method according to claim 5, wherein the data field comprises a null data physical layer protocol data unit announcement NDPA frame, the NDPA frame comprises a partial bandwidth information field, and the partial bandwidth information field indicates a bandwidth on which the measurement feedback is to be performed; and
when the first bandwidth is less than or equal to 160*X MHz, a value of a most significant bit in the partial bandwidth information field is 0, and a measurement feedback resolution indicated by the NDPA frame is 20*X MHz; or
when the first bandwidth is equal to 320*X MHz, the value of the most significant bit in the partial bandwidth information field is 1, and the measurement feedback resolution indicated by the NDPA frame is 40*X MHz.

7. The method according to claim 6, wherein a relationship among the first bandwidth, the size of the RU or the MRU for the measurement feedback, the partial bandwidth information field, and an operating bandwidth of the second device is as follows:
| Size of the RU or the MRU for the measurement feedback | First bandwidth (MHz) | Binary format of the partial bandwidth information field | Operating bandwidth of the second device |
|---|---|---|---|
| Size of the largest RU not exceeding 242/Y | 20*X | 010000000 | (20, 40, 80, 160, 320)*X |
| | 40*X | 010000000, 001000000 | |
| | 80*X | 010000000, 001000000, 000100000, 000010000 | (20, 80, 160, 320)*X |
| | 160*X | 010000000, 001000000, 000100000, 000010000, 000001000, 000000100, 000000010, 000000001 | |
| Size of the largest RU not exceeding 484/Y | 40*X | 011000000 | (40, 80, 160, 320)*X |
| | 80*X | 011000000, 000110000 | (80, 160, 320)*X |
| | 160*X | 011000000, 000110000, 000001100, 000000011 | |
| | 320*X | 110000000, 101000000, 100100000, 100010000, 100001000, 100000100, 100000010, 100000001 | |
| Size of the largest MRU not exceeding (484+242)/Y | 80*X | 011100000, 011010000, 010110000, 001110000 | |
| | 160*X | 011100000, 011010000, 010110000, 001110000, 000001110, 000001101, 000001011, 000000111 | |
| Size of the largest RU not exceeding 996/Y | 80*X | 011110000 | |
| | 160*X | 011110000, 000001111 | |
| | 320*X | 111000000, 100110000, 100001100, 100000011 | |
| Size of the largest MRU not exceeding (996+484)/Y | 160*X | 011111100, 011110011, 011001111, 000111111 | (160, 320)*X |
| | 320*X | 111100000, 111010000, 110110000, 101110000, 100001110, 100001101, 100001011, 100000111 | |
| Size of the largest MRU not exceeding (996+484+242)/Y | 160*X | 011101111, 011011111, 010111111, 001111111, 011111110, 011111101, 011111011, 011110111 | |
| Size of the largest RU not exceeding 2*996/Y | 160*X | 011111111 | |
| | 320*X | 111110000, 100001111 | |
| Size of the largest MRU not exceeding (2*996+484)/Y | 320*X | 111111000, 111110100, 111101100, 111011100, 110111100, 101111100, 100111110, 100111101, 100111011, 100110111, 100101111, 100011111 | 320*X |
| Size of the largest MRU not exceeding 3*996/Y | 320*X | 111111100, 111110011, 111001111, 100111111 | |
| Size of the largest MRU not exceeding (3*996+484)/Y | 320*X | 111111110, 111111101, 111111011, 111110111, 111101111, 111011111, 110111111, 101111111 | |
| Size of the largest RU not exceeding 4*996/Y | 320*X | 111111111 | |

8. The method according to claim 7, wherein the partial bandwidth information field indicates to perform the measurement feedback on a channel other than a punctured channel within a full bandwidth range, the punctured channel is a channel on which the measurement feedback is not to be performed, and the size of the RU or the MRU for the measurement feedback corresponds to a part of values of the binary format of the partial bandwidth information field.

9. The method according to claim 5, wherein a relationship between the first bandwidth and the size of the RU for the measurement feedback is as follows:
| First bandwidth (MHz) | Size of the RU for the measurement feedback |
|---|---|
| 20*X | Size of the largest RU not exceeding 242/Y |
| 40*X | Size of the largest RU not exceeding 484/Y |
| 80*X | Size of the largest RU not exceeding 996/Y |
| 160*X | Size of the largest RU not exceeding 2*996/Y |
| 320*X | Size of the largest RU not exceeding 4*996/Y |

10. The method according to claim 9, wherein
| First bandwidth (MHz) | Size of the RU for the measurement feedback (Y=1) | Size of the RU for the measurement feedback (Y=4) |
|---|---|---|
| 20*X | 242 | 52 |
| 40*X | 484 | 106 |
| 80*X | 996 | 242 |
| 160*X | 2*996 | 484 |
| 320*X | 4*996 | 996 |

11. The method according to claim 9 or 10, wherein the data field comprises an NDPA frame, the NDPA frame does not comprise a partial bandwidth information field, and the partial bandwidth information field indicates a bandwidth on which the measurement feedback is to be performed.

12. The method according to claim 9 or 10, wherein the data field comprises an NDPA frame, the NDPA frame comprises a partial bandwidth information field, and the partial bandwidth information field indicates to perform the measurement feedback within a full bandwidth range.

13. The method according to any one of claims 6 to 8, 11, or 12, wherein the NDPA frame indicates X and/or Y.

14. The method according to any one of claims 6 to 8 and 11 to 13, wherein the NDPA frame indicates the measurement configuration.

15. The method according to any one of claims 1 to 14, wherein the subcarrier resolution is comprised in a first candidate set, the first candidate set is a candidate set, among a plurality of candidate sets, that corresponds to X and/or Y, and each of the plurality of candidate sets comprises at least one candidate subcarrier resolution.

16. The method according to claim 15, wherein the plurality of candidate sets comprise a second candidate set and a third candidate set, and a part or all of candidate subcarrier resolutions in the second candidate set have a multiple relationship with a part or all of candidate subcarrier resolutions in the third candidate set.

17. The method according to any one of claims 1 to 14, wherein the subcarrier resolution is one of a part of candidate subcarrier resolutions in a fourth candidate set, and the part of candidate subcarrier resolutions correspond to X and/or Y.

18. A communication apparatus, comprising a processor, wherein the processor is configured to: communicate with another apparatus through an interface circuit, and perform the method according to any one of claim 1 and claims 3 to 17.

19. A communication apparatus, comprising a processor, wherein the processor is configured to: communicate with another apparatus through an interface circuit, and perform the method according to any one of claims 2 to 17.

20. A computer program product, wherein the computer program product comprises instructions, and when the instructions are run on a processor, the processor is caused to perform the method according to any one of claims 1 to 17.

21. A computer-readable storage medium, wherein the storage medium stores a computer program or instructions, and when the computer program or the instructions are executed by a communication apparatus, the method according to any one of claims 1 to 17 is implemented.

22. A communication system, comprising:
a first device, configured to: send a first PPDU to a second device on a channel corresponding to a first bandwidth, wherein the first PPDU comprises a first field of a first preamble and a data field, a subcarrier spacing of the first field is A, A=X*B, X is an integer greater than 1, B is a subcarrier spacing of a second field of a second preamble in a second PPDU, a subcarrier spacing of the data field is (A/4)*Y, and Y is a positive number; and receive a channel measurement feedback result from the second device, wherein the channel measurement feedback result is obtained by performing a measurement based on a measurement configuration, the measurement configuration indicates a subcarrier resolution for a measurement feedback, and the measurement configuration is related to X and/or Y; and
the second device, configured to: receive, on the channel corresponding to the first bandwidth, the first PPDU from the first device; perform the measurement based on the measurement configuration to obtain the channel measurement feedback result; and send the channel measurement feedback result to the first device.
